# EUROPÄISCHE PATENTSCHRIFT

(11) **EP 2 848 383 B1**
(45) Veröffentlichungstag und Bekanntmachung des Hinweises auf die Patenterteilung: **21.09.2016**
(21) Anmeldenummer: 14179998.1
(22) Anmeldetag: 06.08.2014
(51) Int. Cl.: B29C 49/46, B29C 49/42

(54) **Transporteinrichtung und Verfahren zum Transport von Kunststoffbehältnissen oder Vorformlingen**
Transport device and method for transporting plastic containers or preforms
Dispositif de transport et procédé destiné à transporter des récipients en plastique ou des préformes

(30) Priorität: 12.09.2013 DE 102013218337
(43) Veröffentlichungstag der Anmeldung: 18.03.2015
(73) Patentinhaber: Krones Aktiengesellschaft, 93073 Neutraubling (DE)
(72) Erfinder: EFFENBERGER, Harald, 93073 Neutraubling (DE); HÖLLRIEGL, Thomas, 93073 Neutraubling (DE)
(74) Vertreter: Benninger, Johannes

(56) Entgegenhaltungen:
- EP-A1- 2 388 196
- WO-A1-2007/091164
- DE-U1-202013 101 048
- US-A- 3 648 854
- US-A1- 2012 321 741

## Beschreibung

Die vorliegende Erfindung betrifft eine Vorrichtung zum Umformen von Vorformlingen zu Kunststoffbehältnissen, eine Transporteinrichtung zur Verwendung in einer Vorrichtung zum Umformen sowie ein Verfahren hierzu mit den Merkmalen der unabhängigen Ansprüche.

Bei der Getränkeabfüllung in Kunststoffbehältern findet in der Praxis im Verlauf eines Produktionsprozesses, ausgehend von einem Vorformling (Preform) bis hin zur abgefüllten Flasche, ein Sterilisationsvorgang statt, um einer späteren Verkeimung des jeweiligen Behältnisses entgegenzuwirken und um die Haltbarkeit der abgefüllten Getränke gewährleisten zu können. Nach einem erfolgten Sterilisationsvorgang kann eine spätere Verkeimung dennoch in manchen Fällen nicht gänzlich ausgeschlossen werden, da das jeweilige sterilisierte Behältnis mehreren weiteren Behandlungsvorgängen unterzogen werden muss, so dass während des Transportes zu den jeweiligen Behandlungs- und/oder Handhabungsstationen die Gefahr einer erneuten Verunreinigung und/oder Verkeimung besteht.

Aus der zum Zeitpunkt der vorliegenden Anmeldung noch nicht veröffentlichten Druckschrift DE102012221804 ist eine Vorrichtung zum Streckblasen von Kunststoffbehältnissen bekannt, bei welcher ein Transportstern mit mehreren sowohl drehbaren als auch linear verfahrbaren, an Übergabearmen angeordneten Greifern offenbart wird, wobei sich bis auf den Antrieb und Teile der Antriebswelle des Sterns, sowohl die Greifer, die drehbare Halterung der Greifer als auch alle Lager der Übergabearme innerhalb eines Reinraums befinden. Die Drehbarkeit und die lineare Verfahrbarkeit werden benötigt, um den Abstand der Vorformlinge zueinander auf einer Transporteinrichtung für die nächste Behandlungseinrichtung einstellen zu können. Beispielsweise ist der Abstand zweier Blasstationen üblicherweise größer als der Abstand der Vorformlinge während des Heizens im Ofen. Jedoch weisen die Linearlager der Übergabearme aus der genannten Druckschrift eine Lagerung auf, welche bzgl. der sehr hohen Kräfte und Momente an ihre Belastungsgrenzen stoßen und somit die Ausstoßleistung (Behälter pro Stunde) beschränken. Zudem sind die verwendeten Gleitrollen und deren Befestigung für eine Anwendung im Reinraum bzgl. Sterilisierbarkeit nicht so gut geeignet.

Durch WO 2007/091164 A1 ist eine Transporteinrichtung zur Verwendung in einer Vorrichtung zum Umgang mit gefüllten Pralinen bekannt. Die Transporteinrichtung umfasst einen motorischen Antrieb mit einer Antriebswelle, die ein Trägerelement mit wenigstens zwei Greif- und/oder Halteelementen für die jeweiligen zu transportierenden Pralinen rotierend antreibt. Die Greif- und/oder Halteelemente sind relativbeweglich zum Trägerelement mit einem Linearlager gelagert. Das Linearlager weist eine Schiene auf.

Durch US 3,648,854 ist eine Transporteinrichtung umfassend einen motorischen Antrieb mit einer Antriebswelle, die ein Trägerelement mit wenigstens zwei Greifund/oder Halteelementen für die jeweiligen zu transportierenden Gegenstände rotierend antreibt bekannt. Die Greif- und/oder Halteelemente sind relativbeweglich zum Trägerelement mit einem Linearlager gelagert. Das Linearlager weist eine Schiene auf.

Durch DE 20 2013 101 048 U1 ist eine Vorrichtung zum Umgang mit Behältnissen bekannt. Die Vorrichtung umfasst einen motorischen Antrieb mit einer Antriebswelle, die ein Trägerelement mit wenigstens zwei Greif- und/oder Halteelementen für die jeweiligen zu transportierenden Behältnisse rotierend antreibt. Die Greif- und/oder Halteelemente sind relativbeweglich zum Trägerelement mit einem Linearlager gelagert. Das Linearlager weist eine Schiene auf. Die Vorrichtung umfasst außerdem eine Transporteinrichtung für die Behältnisse auf.

Durch EP 2 388 196 A1 ist ein Transferstern zum Transport von Artikeln von einer Heizstrecke zu einem Blasformmodul bekannt. Der Transferstern weist eine Mehrzahl von Greifvorrichtungen zum Greifen und Festhalten der Artikel auf. Der Abstand der Artikel in der Heizstrecke entspricht nicht dem Abstand der Artikel in dem Blasformmodul. Auf dem Transferstern ist eine elektronische Steuervorrichtung angeordnet. Diese dient der Steuerung des Abstands der in das Blasformmodul einlaufenden Artikel.

Durch US 2012/321741 A1 ist eine Vorrichtung zum Umformen von Kunststoffvorformlingen zu Kunststoffbehältnissen mit einer Vielzahl von Blasstationen bekannt, welche an einem beweglichen Träger angeordnet sind. Die Blasstationen weisen jeweils zwei Blasformteile aufweisende Blasformen auf, die in ihrem Inneren einen Hohlraum ausbilden, innerhalb dessen die Kunststoffvorformlinge expandierbar sind. Die Blasstationen weisen jeweils Beaufschlagungseinrichtungen auf, welche die Kunststoffvorformlinge zu deren Expansion mit einem fließfähigen Medium beaufschlagen. Die Blasformteile sind jeweils an Blasformträgern angeordnet. Die Blasformträger sind bezüglich einander zum Öffnen und Schließen der Blasform bewegbar. Die Blasstationen weisen einen Verriegelungsmechanismus auf, um die Blasformträger in einem geschlossenen Zustand miteinander zu verriegeln. Dieser Verriegelungsmechanismus weist ein erstes sowie ein zweites gegenüber dem ersten bewegbares Verriegelungselement auf. Wenigstens eine erste Lagereinrichtung ist zur beweglichen Lagerung der Blasformträger gegenüber einander und wenigstens eine zweite Lagereinrichtung zur beweglichen Lagerung des ersten Verriegelungselements gegenüber dem zweiten Verriegelungselement vorgesehen. Wenigstens eine dieser Lagereinrichtungen ist als schmiermittelloses Gleitlager oder als Lager, welches zwischen relativ zueinander beweglichen Lagerteilen wenigstens teilweise mit einem Kunststoff ausgespritzt ist, ausgeführt.

Ein vorrangiges Ziel der vorliegenden Erfindung besteht daher in der Lieferung einer Vorrichtung und eines Verfahrens, mit denen hohe Ausstoßleistungen möglich sind und dabei vorzugsweise gleichzeitig eine Reinigbar- und/oder Sterilisierbarkeit verbessern.

Dieses Ziel der Erfindung wird durch eine Vorrichtung sowie durch ein Verfahren mit den Merkmalen der unabhängigen Ansprüche erreicht. Weitere vorteilhafte Ausgestaltungen werden durch die jeweiligen abhängigen Ansprüche beschrieben.

Die erfindungsgemäße Vorrichtung zum Umformen von Vorformlingen zu Kunststoffbehältnissen umfasst mindestens zwei, auf einem umlaufend angetriebenen Blasrad angeordnete Blasformen, innerhalb derer die Vorformlinge zu Kunststoffbehältnissen expandiert werden, eine Heizeinrichtung zum Erwärmen der Vorformlinge und eine Transporteinrichtung für die Kunststoffbehältnisse oder Vorformlinge, die Transporteinrichtung umfasst:
einen motorischen Antrieb mit einer Antriebswelle, die ein Trägerelement mit wenigstens zwei Greif- und/oder Halteelementen für die jeweiligen zu transportierenden Kunststoffbehältnisse oder Vorformlinge rotierend antreibt, wobei die Greif- und/oder Halteelemente relativbeweglich zum Trägerelement mit einem Linearlager gelagert sind, dadurch gekennzeichnet, dass das Linearlager zumindest eine Schiene aufweist, welche von einem Käfig zumindest abschnittsweise umgeben ist und innerhalb des Käfigs eine Vielzahl von Wälzkörpern, insbesondere mehr als 50 Wälzkörper, angeordnet ist, welche sich auf der Schiene abwälzen bzw. bewegen.

Durch den Einsatz eines Käfigs und einer Vielzahl von Wälzkörpern, welche im Käfig geführt sind, können die Belastungen bzw. Kräfte auf eine große Fläche verteilt werden, so dass auch sehr hohe Drehzahlen der Transporteinrichtung und eine damit verbundene höhere Ausstoßleistung erreicht werden können, ohne dass die Lagerung Schaden nimmt. Zudem ist ein Käfig mit darin geführten Wälzkörpern leichter reinig- bzw. sterilisierbar.

Die Transporteinrichtung transportiert die Vorformlinge und/oder Behälter bevorzugt in einer horizontalen Ebene. Insbesondere werden die Vorformlinge auch von dem Blasrad in einer horizontalen Ebene transportiert.

Die Vorrichtung weist insbesondere zwei derartige Transporteinrichtungen auf, wovon eine zur Eingabe der Vorformlinge in das Blasrad und eine zur Entnahme der Behälter aus dem Blasrad ausgebildet ist. Die Transporteinrichtungen sind, in Richtung des Erdmittelpunktes gesehen, in dem Fall im Wesentlichen tangential zum Blasrad angeordnet. Die Transportbahn der Vorformlinge in diesem Bereich der Vorrichtung ist im Wesentlichen mäanderförmig. Alternativ kann auch eine einzige Transportvorrichtung (also nur ein Stern) zur Eingabe und/oder Entnahme der Vorformlinge bzw. Behälter vorgesehen sein, wovon beispielsweise jeder zweite Greifer Behälter eingibt und alle anderen Greifer dazwischen Behälter entnehmen.

Es können auch drei oder mehr derartige Transporteinrichtungen vorgesehen sein, insbesondere wenn weitere Behandlungen der Vorformlinge oder Kunststoffbehälter vorgenommen werden. In Transportrichtung gesehen wäre beispielsweise folgende Anordnung möglich:
Temperiervorrichtung, Transporteinrichtung, Sterilisationseinrichtung, Transporteinrichtung, Blasrad, Transporteinrichtung.

Die Vorrichtung kann insbesondere einen im Wesentlichen geschlossenen Reinraum umfassen. In diesem Reinraum sind insbesondere die zumindest zwei Blasformen, das Trägerelement, das Linearlager und die wenigstens zwei Greif- und/oder Halteelemente vollständig aufgenommen.

Der Reinraum kann eine Atmosphäre aufweisen, welche weniger Keime, Verunreinigungen, Bakterien oder Sporen enthält als die Atmosphäre außerhalb des Reinraums. Insbesondere kann hierzu ein Luftfilter an der Vorrichtung angeordnet sein, durch welchen (beispielsweise mittels eines Gebläses) gefilterte Luft in den Reinraum eingeleitet wird. Insbesondere kann es sich bei der eingeleiteten Luft um im Wesentlichen sterile Luft handeln. Insbesondere wird der Reinraum somit unter einem leichten Überdruck gegenüber der Atmosphäre außerhalb des Reinraums gehalten. Der Druckunterschied kann beispielsweise in einem Bereich von 0,1 mbar bis 400mbar betragen. Insbesondere kann der Reinraum Abdichtungen aufweisen, welche den Reinraum gegenüber der äußeren Atmosphäre zumindest bereichsweise abdichten. Bei den Dichtungen kann es sich um Dichtungen aus elastischem Material oder um hydraulische Dichtungen wie Wasserschlösser handeln. Die Dichtungen können vorzugsweise kreisförmig entlang des Umfangs des drehenden Trägers ausgebildet sein. Insbesondere handelt es sich bei den Dichtungen um aseptische Dichtungen. Weiterhin können der Reinraum und/oder der Teile der Umformungsstationen, welche sich im Reinraum befinden, in gewissen, insbesondere regelmäßigen, Zeitabständen gereinigt und/oder sterilisiert werden. Vorzugsweise kann eine Reinigung zuerst mit Schaum, dann zum Entfernen des Schaums mit Sterilwasser durchgeführt werden. Eine Sterilisation kann mit gasförmigem Wasserstoffperoxid durchgeführt werden. Die Mittel zum Einbringen der Reinigungs- und Sterilisationsmedien können stationär oder mit dem Träger mitdrehend angeordnete Düsen sein. Auch durch Blasdüsen der Umformungsstationen kann beispielsweise Sterilisationsmedium austreten. Die genannten Mittel zur Bereitstellung des Reinraums oder Kombinationen von ihnen können je nach den Anforderungen an die Hygiene, Sauberkeit oder Sterilität der Maschine oder der mit ihr gefertigten Kunststoffbehältnisse eingesetzt werden.

Der Käfig ist insbesondere zumindest abschnittsweise innerhalb einer Führung angeordnet, welche den Käfig zumindest abschnittsweise umgibt (insbesondere in Umfangsrichtung des Käfigs) und wobei sich die Wälzkörper auf der Führung bzw. deren Innenoberfläche abwälzen.

Die Länge des Käfigs in einer Längsrichtung des Linearlagers ist länger als die Führung und/oder die Schiene. Somit können Bereiche des Käfigs zumindest zeitweise freiliegen und können für eine Sterilisation und/oder eine Reinigung zugänglich gemacht werden. Eine Reinigung kann beispielsweise mit Schaum durchgeführt werden, wobei der Schaum insbesondere über auf das Linearlager zumindest zeitweise gerichtete Düsen aufgebracht wird. Eine Sterilisation kann beispielsweise mittels gasförmigen Wasserstoffperoxid (H2O2) durchgeführt werden, welches insbesondere aus den Blasformen zugeordneten Blasdüsen austritt und somit insbesondere sowohl die Blasluftkanäle als auch den Innenraum des Reinraums sterilisiert, weil es sich durch diesen Aggregatzustand in der Vorrichtung bzw. dessen Reinraum verteilt. Wenn Schleusen zwischen einzelnen Transporteinrichtungen angeordnet sind, so können auch weitere, insbesondere stationäre, Düsen zum Einbringen von H2O2 in den Reinraum vorhanden sein.

Ein Abstand einer Außenseite des Käfigs zur Führung und/oder einer Innenseite des Käfigs zur Schiene ist insbesondere größer als ein Zwanzigstel, bevorzugt ein Zwölftel, des Abstands von der Innenseite der Führung zur Außenseite der Schiene. Der Abstand von der Innenseite der Führung zur Außenseite der Schiene kann im Wesentlichen dem Durchmesser der Wälzkörper entsprechen. Somit kann auch Sterilisationsgas zwischen diese beiden Oberflächen eindringen und sowohl diese als auch die Wälzkörper sterilisieren.

Ein Abstand der Außenseite des Käfigs zur Innenseite des Käfigs ist insbesondere mindestens ein Zehntel, bevorzugt mindestens ein Fünftel, des Abstands von der Innenseite der Führung zur Außenseite der Schiene.

Das Linearlager ist insbesondere schmiermittelfrei ausgebildet ist. Der Käfig ist insbesondere aus einem Kunststoff, insbesondere PEEK, oder einem anderen Werkstoff der gegenüber dem Sterilisationsmittel beständig ist, gefertigt. Insbesondere sind sowohl die Schiene als auch die Führung aus Edelstahl oder einem beschichtetem Stahl der gegenüber dem Sterilisationsmittel beständig ist, gefertigt. Diese Materialen eigenen sich sehr gut zur Aufnahme hoher Kräfte und bieten gleichzeitig ein gutes Verhalten bzgl. Korrosion, insbesondere, wenn sie regelmäßig mit aggressiven Reinigungs- und/oder Sterilisationsmedien in Berührung kommen.

In Längsrichtung des Linearlagers gesehen, ist an mindestens einem Ende, bevorzugt an beiden Enden, des Käfigs ein Anschlag für die Führung angeordnet. Der Anschlag bewirkt, dass sich der Käfig relativ zur Schiene nicht zu weit verschieben kann, sondern im Fall einer Verschiebung wieder von der Führung "zurückgeholt" wird.

Der Käfig ist insbesondere als zylindrische Hülse ausgeprägt, innerhalb derer sich eine Vielzahl von Bohrungen, deren Längsachsen im Wesentlichen senkrecht zu einer Mittelachse des Linearlagers ausgerichtet sind, sowohl entlang der Längsrichtung als auch entlang der Umfangsrichtung befindet und in den Bohrungen Kugeln als Wälzkörper, insbesondere aus Edelstahl oder Keramik, angeordnet sind. Durch eine Verteilung der Wälzkörper entlang des gesamten Umfangs und der gesamten Länge des Käfigs ist eine optimale Kräfteaufnahme in allen Richtungen möglich.

Insbesondere rotieren die Wälzkörper relativ zum Käfig.

Bevorzugt sind mindestens zwei, insbesondere mit zylindrischen Schienen versehene, Linearlager pro Greif- und/oder Halteelement zur Lagerung des Greifund/oder Halteelements vorgesehen. Zudem können somit bei relativ dünnem Durchmesser der Führungen/Käfige/Schienen höhere Kräfte aufgenommen werden. Alternativ ist es aber auch vorstellbar, nur lediglich ein Linearlager pro Greif- und/oder Halteelement mit einer profilierten Schiene (beispielsweise mit rechteckigem oder DoppelT-Träger-Querschnitt) zu verwenden.

Insbesondere ist ein Ventil vorgesehen, welches zwischen einem Reservoir mit Sterilisations- und/oder Reinigungsmedium und dem Reinraum angeordnet ist und welches zum Einlass von dem Sterilisations- und/oder Reinigungsmedium geöffnet werden kann und wobei eine Steuerungsvorrichtung derart ausgelegt ist, zumindest zeitweise im Wesentlichen gleichzeitig über den Antrieb die Transporteinrichtung drehend anzutreiben sowie das Ventil geöffnet zu halten.

Die Transporteinrichtung zur Verwendung in einer Vorrichtung zum Umformen von Vorformlingen zu Kunststoffbehältnissen umfasst einen motorischen Antrieb mit einer Antriebswelle, die ein Trägerelement mit wenigstens zwei Greif- und/oder Halteelementen für die jeweiligen zu transportierenden Kunststoffbehältnisse oder Vorformlinge rotierend antreibt, wobei die Greif- und/oder Halteelemente relativbeweglich zum Trägerelement mit einem Linearlager gelagert sind. Das Linearlager weist dabei zumindest eine Schiene auf, welche von einem Käfig zumindest abschnittsweise umgeben ist. Innerhalb des Käfigs ist eine Vielzahl von Wälzkörpern, insbesondere mehr als 50 Wälzkörper, angeordnet, welche sich auf der Schiene abwälzen.

Insbesondere ist die Transporteinrichtung dazu geeignet, Vorformlinge in eine auf einem rotierenden Blasrad angeordnete Blasform zu übergeben und/oder fertig geformte Behälter aus dieser Form zu entnehmen.

Vorstellbar ist bspw., dass vor einem Streckblasvorgang die Sterilisation von Vorformlingen erfolgt und die Vorformlinge über die erfindungsgemäße Transporteinrichtung an ein nachfolgendes Blasrad einer Blasmaschine bzw. Streckblasmaschine weitertransportiert werden. Zudem können einer Sterilisationsstation für die jeweiligen Vorformlinge weitere Stationen wie bspw. ein Ofen zur Temperaturbeaufschlagung der jeweiligen Vorformlinge vorgeordnet sein. Auch ist vorstellbar, dass die aus den Vorformlingen geformten Behälter nach Passieren der Streckblasmaschine über die erfindungsgemäße Transporteinrichtung in Richtung weiterer Stationen, wie bspw. einer Füll- und/oder Verschließeinrichtung, transportiert werden.

Die Transporteinrichtung kann somit vorgesehen sein zum Transport von Behältern oder Vorformlingen (sog. Preforms). Die jeweiligen Greif- und/oder Halteelemente sind demnach zur Aufnahme der jeweiligen Behälter bzw. Vorformlinge ausgebildet. Bspw. können die Greif- und/oder Halteelemente durch steuerbare, öffenund schließbare Greiffinger oder Greifzangen bzw. Klammern ausgebildet sein. Denkbar ist auch, dass die Greif- und/oder Halteelemente ergänzend oder alternativ Stand- oder Drehteller umfassen, auf welchen die Behälter oder Vorformlinge während ihrer Beförderung durch die Transporteinrichtung angeordnet sind. Vorgesehen sind mindestens zwei Greif- und/oder Halteelemente, die mittels des Trägerelements und des motorischen Antriebs rotierend angetrieben werden. In der Praxis haben sich jedoch Ausführungsformen bewährt, bei welchen am Trägerelement eine Vielzahl von Greif- und/oder Halteelementen für eine entsprechende Anzahl von Behältern oder Vorformlingen angeordnet sind, die mittels der Greif- und/oder Halteelemente in ihrem Halsbereich gehalten werden, normalerweise unterhalb eines sog. Gewindebereichs und/oder abwechselnd oberhalb und unterhalb eines sog. "Neckrings", eines ringförmigen Absatzes unterhalb des Gewindebereichs.

Der motorische Antrieb kann bspw. als elektrischer Servomotor ausgebildet sein, wahlweise auch als hydraulischer Antrieb o. dgl. Die Transporteinrichtung kann bspw. als sog. Teilungsverzugsstern ausgebildet sein, mit welchem die Behälter bzw. Vorformlinge während ihres Transportes über die Transporteinrichtung auf einen vorgegebenen Abstand gebracht werden. So können die Vorformlinge bspw. von einer Spritzgussmaschine zugeliefert und zur Transporteinrichtung befördert werden, wobei die Abstände der Vorformlinge voneinander relativ gering sind. Um die Vorformlinge beheizen und anschließend mittels eines Blas- oder Streckblasvorganges in ihre vorgesehene Behälterform bringen zu können, müssen sie voneinander beabstandet werden, was insbesondere mittels eines solchen Teilungsverzugssterns oder auch mittels mehrerer aufeinander folgend angeordneter Teilungsverzugssterne erfolgen kann.

In einer bevorzugten Ausführungsform der vorliegenden Erfindung umfasst die Antriebswelle im Bereich ihres dem Antrieb abgewandten Endes einen Flanschabschnitt, über welchen das Trägerelement an der Antriebswelle fixierbar ist. Die Rotationsbewegung der Antriebswelle kann um eine im Wesentlichen vertikal orientierte Achse erfolgen.

Das Trägerelement kann bspw. als Tragscheibe ausgebildet sein. Die Greif- und/oder Halteelemente können an einer unteren und dem Antrieb zugewandten Seite der Tragscheibe angeordnet sein. Bspw. können die Greif- und/oder Halteelemente in regelmäßigen Abständen an der Tragscheibe angeordnet sein. Auch kann es sinnvoll sein, die Greif- und/oder Halteelemente in jeweils gleichem radialem Abstand von der Antriebswelle an dem Trägerelement bzw. an der Tragscheibe anzuordnen bzw. zu befestigen.

Zudem kann es sinnvoll sein, wenn das Trägerelement bzw. die Tragscheibe ein oder mehrere Aussparungen aufweist, um einerseits seine Masse und damit sein Massenträgheitsmoment zu reduzieren. Andererseits kann auf diese Weise bei einem Reinigungsvorgang oder Sterilisationsvorgang der Transporteinrichtung Reinigungsfluid durch die Aussparungen an zur Tragscheibe benachbarte Komponenten der Transporteinrichtung weitergegeben werden. Generell sind solche Aussparungen von Vorteil, um die Masse der jeweiligen Tragscheibe reduzieren und Material bei Fertigung der Tragscheibe einsparen zu können. Zudem können die Aussparungen für ein gleichmäßiges und/oder schnelles Durchwärmen der Bauteile eingebracht werden. Das Erwärmen dient dazu, dass während des Sterilisationsprozesses kein Sterilsiationsgas an den Oberflächen kondensiert. Insbesondere wird das Linearlager auf eine Temperatur erwärmt, welche oberhalb des Taupunkts eines Sterilisationsgases, insbesondere H2O2 liegt. Genauso können alle anderen Teile innerhalb des Reinraums auf diese Temperatur erwärmt werden.

Weiter umfasst die Transporteinrichtung zumindest einen im Wesentlichen geschlossenen Reinraum oder ist Bestandteil eines solchen Reinraums, in dem das Trägerelement und die wenigstens zwei Greif- und/oder Halteelemente vollständig aufgenommen sind. So kann der Reinraum vorzugsweise einen Eingang und einen Ausgang aufweisen, durch welche die Vorformlinge bzw. die Behälter in den Reinraum und aus dem Reinraum führbar sind und darüber hinaus keine offenen oder nicht abgedichteten Durchtritte besitzen. Auch kann es sein, dass der Reinraum durch mehrere den Reinraum begrenzende Wandabschnitte gebildet ist, die beispielweise durch Kunststoff oder Metall ausgebildet sein können. Zudem ist denkbar, dass in einem Reinraum mehrere Tragscheiben und Greif- und/oder Halteelemente von mehreren Transporteinrichtungen angeordnet sind, wobei der Reinraum als gemeinsamer Reinraum der mehreren Transporteinrichtungen ausgebildet ist. In einem Reinraum herrschen zumindest annäherungsweise sterile Umgebungsbedingungen. Hierzu kann der Reinraum zyklisch, bspw. nach jeweils 48 Stunden, einem Desinfektionsprozess unterzogen werden. Vorstellbar ist hierbei, dass Reinigungsgas und/oder -fluid in den Reinraum eingebracht bzw. eingedampft und anschließend aus dem Reinraum abgeführt bzw. abgesaugt wird. Bspw. kann das Reinigungsgas Wasserstoffperoxid aufweisen und mit einer Temperatur von ca. 130 bis 150 °C dem Reinraum zugeführt werden. Bevorzugt werden während eines Reinigungsvorgangs wenigstens die Tragscheibe als auch die Greif- und/oder Halteelemente zusammen mit der Tragscheibe bewegt. Auch hier ist es von Vorteil, wenn die Tragscheibe Aussparungen aufweist, da bei den erwähnten Temperaturen des Reinigungsgases bzw. -fluids und der aus den Aussparungen resultierenden geringeren Masse der Tragscheibe eine Erwärmung der Tragscheibe aufgrund der Eigentemperatur des Reinigungsgases schneller bewirkbar ist.

Vorstellbar ist auch, dass dem Reinigungsvorgang der Transporteinrichtung mit Reinigungsgas ein Reinigungsvorgang der Transporteinrichtung mit Reinigungsfluid vorrausgeht. Nach einem Reinigungsvorgang kann auch ein Spülvorgang mit sterilem Wasser zum Entfernen der Rückstände des Reinigungsfluids durchgeführt werden.

In einer bevorzugten Ausführungsform der vorliegenden Erfindung kann der Antrieb als ein die Transporteinrichtung zumindest teilweise tragendes oder stützendes Standbein ausgebildet sein. Hierzu kann der motorische Antrieb auf einer Bodenfläche der Maschine oder eines Fundaments aufstehen und/oder an weiteren Stützkonstruktionen angeordnet sein, wobei ein oder mehrere weitere Bestandteile der Transporteinrichtung vom motorischen Antrieb gestützt oder getragen werden. Vorteilhaft ist der motorische Antrieb im Bereich eines Schwerpunktes der Transporteinrichtung angeordnet, so dass durch die Ausbildung des motorischen Antriebs als Standbein und Anordnung im Bereich des Schwerpunktes eine stabile Lagerung der Transporteinrichtung hergestellt ist. Der Antrieb kann als Direktantrieb ausgebildet sein, was bedeutet, dass kein Getriebe vorhanden ist. Insbesondere ist die Antriebswelle dann der Rotor und ist zumindest bereichsweise von einem stationären Stator umgeben.

Darüber hinaus kann auf einer oberen und dem Reinraum zugewandten Seite des Antriebs eine sich vom Antrieb weg erstreckende Stützkonstruktion angeordnet sein, auf welcher ein oder mehrere im Reinraum angeordnete Bestandteile der Transporteinrichtung oder der Reinraum zusammen mit ein oder mehreren der im Reinraum angeordneten Bestandteilen der Transporteinrichtung aufstehen und/oder befestigt sind. Die Stützkonstruktion kann hierbei außerhalb des Reinraums angeordnet sein. Vorstellbar ist, dass der motorische Antrieb auf seiner oberen und dem Reinraum zugewandten Seite einen Flanschabschnitt aufweist, auf welchem die Stützkonstruktion fixiert ist.

Insbesondere haben sich Ausführungsformen bewährt, bei welchen die Stützkonstruktion mehrere sich vom Antrieb weg erstreckende Auslegerarme mit jeweils wenigstens einer Stützsäule aufweist, auf denen ein oder mehrere der im Reinraum angeordneten Komponenten der Transporteinrichtung oder der Reinraum zusammen mit ein oder mehreren der im Reinraum angeordneten Bestandteilen der Transporteinrichtung aufstehen und/oder befestigt sind. Die Auslegerarme können hierbei sternförmig vom motorischen Antrieb bzw. vom Flanschabschnitt des motorischen Antriebs abstehend ausgebildet sein. Bspw. können vier oder mehrere Auslegerarme mit jeweils wenigstens einer Stützsäule vorhanden sein. Eine oder mehrere der Stützsäulen können zweiteilig mit je einem ersten und je einen zweiten Stützsäulenabschnitt ausgebildet sein. Der jeweils erste Stützsäulenabschnitt und der jeweils zweite Stützsäulenabschnitt können derart angeordnet sein, dass sie miteinander fluchten. Weiter kann es sein, dass ein unterer Wandabschnitt des Reinraums im Bereich von Kontaktstellen des jeweils ersten Stützsäulenabschnitts und des jeweils zweiten Stützsäulenabschnitts verläuft. Die Stützsäulen können jeweils im Bereich der Kontaktstellen durch den Reinraum hindurchtreten. Im Bereich der jeweiligen Kontaktstellen kann weiterhin eine Dichtungseinrichtung vorhanden sein.

Um eine Verunreinigung des Reinraums weiter vermeiden oder reduzieren zu können, kann in einer bevorzugten Ausführungsform der vorliegenden Erfindung der motorische Antrieb außerhalb des Reinraums angeordnet sein und der Reinraum eine Durchtrittsöffnung aufweisen, über welche die Antriebswelle des motorischen Antriebs in den Reinraum geführt ist. Bspw. kann die Durchtrittsöffnung durch einen unteren Wandabschnitt des Reinraums geführt sein. Auch kann es von Vorteil sein, wenn der Reinraum gegenüber einem Außenbereich und im Bereich der Durchtrittsöffnung mittels einer Dichtungseinrichtung und insbesondere mittels einer fluidischen Dichtungseinrichtung abgedichtet ist. Bspw. kann die Dichtungseinrichtung als sogenanntes Wasserschloss ausgebildet sein. Vorstellbar ist hierbei, dass das Dichtungsfluid der fluidischen Dichtungseinrichtung mitsamt den darin gebundenen Verunreinigungen in regelmäßigen Abständen ausgewechselt wird. Insbesondere kann auch eine Dichtung aus einem Kunststoff eingesetzt werden, insbesondere aus gummiartigem Material.

Weiter können die Greif- und/oder Halteelemente schwenkbar am Trägerelement angeordnet sein und die Transporteinrichtung eine vollständig im Reinraum angeordnete Führungseinheit, insbesondere eine Kurvenscheibe, umfassen, mit der die Greif- und/oder Halteelemente derart in Wirkverbindung gebracht sind, dass aus einer Rotationsbewegung des Trägerelementes resultierend die Greif- und/oder Halteelemente definiert und relativ zum Trägerelement schwenkbar und/oder hubbeweglich sind. Bspw. können die Greif- und/oder Halteelemente über jeweils einen Bolzen am Trägerelement befestigt sein, wobei der Bolzen durch oder in eine Aussparung des jeweiligen Greif- und/oder Halteelementes greift. Der Bolzen kann hierbei als Schwenkachse für das jeweilige Greif- und/oder Halteelement ausgebildet sein. Bspw. können die jeweiligen Bolzen sich parallel zur Antriebswelle erstrecken. Auch kann die Führungseinheit als Führungsscheibe ausgebildet sein, die ggf. zumindest abschnittsweise parallel zu dem als Tragscheibe ausgebildeten Trägerelement angeordnet ist. Vorstellbar ist darüber hinaus, dass sich die Führungseinheit vollständig um die Antriebswelle erstreckt.

Auch kann die Führungseinheit wenigstens eine Führungsbahn, vorzugsweise jedoch wenigstens zwei Führungsbahnen umfassen, in welche jeweils ein oder mehrere Eingriffsmittel und insbesondere Führungsrollen und/oder Führungslager der jeweiligen Greif- und/oder Halteelemente bei einer Rotationsbewegung des Trägerelementes zwangsgeführt sind. Auch können die Eingriffsmittel in einfachen Ausführungsformen als Stab, Bolzen oder Finger ausgebildet sein, die in der jeweiligen Führungsbahn gleiten.

Die Führungsbahn ist somit adaptiv an die Formgebung der jeweiligen Eingriffsmittel angepasst. Führungsrollen und/oder Führungslager können vorliegend zugänglich ausgebildet sein, so dass während eines Reinigungsvorgangs sämtliche Komponenten der jeweiligen Führungsrolle und/oder des jeweiligen Führungslagers mit Reinigungsfluid beaufschlagbar sind. Insbesondere haben sich in der Praxis hierfür offene Radiallager oder Gleitlager bewährt, die keine Schmier- oder Gleitstoffe aufweisen. Bspw. können die Eingriffsmittel durch geeignete Kunststoffelemente ausgebildet sein. Bevorzugt kann die Führungsbahn vollständig um die Antriebswelle geführt sein, wobei die radiale Beabstandung der Führungsbahn von der Antriebswelle im Verlauf ihrer Führung um die Antriebswelle ab- und zunehmend ausgebildet ist.

In einer bevorzugten Ausführungsform der vorliegenden Erfindung kann die Führungseinheit eine erste und eine zweite Führungsbahn aufweisen. Weiter kann jedes der Greif- und/oder Halteelemente jeweils wenigstens ein erstes und wenigstens ein zweites Eingriffsmittel aufweisen. Das wenigstens eine erste Eingriffsmittel kann jeweils in der ersten Führungsbahn zwangsgeführt sein, das wenigstens eine zweite Eingriffsmittel kann jeweils in der zweiten Führungsbahn zwangsgeführt sein. Die erste Führungsbahn und die zweite Führungsbahn können vollständig um die Antriebswelle geführt sein. Die erste Führungsbahn kann im Verlauf ihrer Führung um die Antriebswelle im Wesentlichen radial gleichbleibend oder radial ab- und zunehmend zur Antriebswelle beabstandet sein, die zweite Führungsbahn kann eine größere radiale Erstreckung von der Antriebswelle als die erste Führungsbahn aufweisen und ebenso im Verlauf ihrer Führung um die Antriebswelle radial gleichbleibend oder radial ab- und zunehmend von der Antriebswelle beabstandet sein. Das wenigstens eine zweite Eingriffsmittel kann über das jeweilige Greif- und/oder Halteelement an das Linearlager gekoppelt sein, so dass aus einer Führung des jeweiligen zweiten Eingriffsmittels in der zweiten Führungsbahn eine Hub- oder Rückzugsbewegung des jeweiligen Greif- und/oder Halteelementes resultiert. Weiter kann aus einer Führung des jeweiligen ersten Eingriffsmittels in der ersten Führungsbahn eine Schwenkbewegung des jeweiligen Greif- und/oder Halteelementes resultieren. Die Transporteinrichtung kann somit als Teilungsverzugsstern ausgebildet sein. Bevorzugt sind die erste Führungsbahn und die zweite Führungsbahn sowie das wenigstens eine erste Eingriffsmittel und das wenigstens eine zweite Eingriffsmittel durch Kunststoff und/oder Keramik und/oder Edelstahl oder einem geeigneten Leichtmetall ausgebildet. Insbesondere werden als Rollen ausgeprägte Eingriffsmittel mit Vollkeramiklagern gelagert, in denen ebenfalls aus Kunststoff oder Metall gefertigte Kugelkäfige vorgesehen sind. Diese Lager sind ebenfalls schmierstofffrei ausgebildet. Diese Lagerung wird insbesondere für alle Eingriffsmittel der Übergabearme eingesetzt. Ebenso kann diese Lagerung für das Schwenklager am Basiselement eingesetzt werden.

Auch sind weitere Ausführungsformen vorstellbar, bei welchen eine definierte Schwenkbewegung der Greif- und/oder Halteelemente an eine definierte Hubbewegung der Greif- und/oder Halteelemente gekoppelt ist. Bevorzugt haben sich hierbei Ausführungen mit Zwangsführung bewährt. Beispielhaft kann es sein, dass die Schwenk- und Hubbewegung derart miteinander gekoppelt sind, dass die jeweiligen Vorformlinge oder Kunststoffbehälter während ihres Transportes wenigstens abschnittsweise in linearer Richtung bewegbar sind.

Denkbar ist, dass die Führungseinheit eine oder mehrere Aussparungen aufweist. So kann bei einem Reinigungsvorgang oder Sterilisationsvorgang der Transporteinrichtung Reinigungsfluid und/oder Reinigungsgas durch die Aussparungen an zur Führungseinheit benachbarte Komponenten der Transporteinrichtung weitergegeben werden. Vorstellbar ist bspw., dass während des Reinigungsvorgangs Wasserstoffperoxid durch die Aussparungen an zur Führungseinheit benachbarte Komponenten der Transporteinrichtung weitergegeben wird.

Zudem kann im Reinraum eine die Führungseinheit tragende Halteeinrichtung angeordnet sein, die ein oder mehrere Verbindungsmittel zum austauschbaren Fixieren der Führungseinheit aufweist. Bspw. können die Verbindungsmittel form- und/oder kraftschlüssig in die Halteeinrichtung greifen. Weitere alternative oder ergänzende Mittel, wie bspw. Schnapp- und/oder Rast- und/oder Klemmverbindungen zum Fixieren der Führungseinheit an der Halteeinrichtung sind ebenso denkbar. Auch kann sich die Halteeinrichtung vollständig um die Antriebswelle erstrecken. Zudem kann es sein, dass die Führungseinheit der Halteeinrichtung und dem Trägerelement zwischengeordnet ist.

Anstatt der Führungseinheit können auch elektrische oder magnetische Antriebe zum Einsatz kommen, entweder für die lineare Beweglichkeit der Greif- und/oder Halteelemente oder die schwenkende Beweglichkeit der Greif- und/oder Halteelemente oder für beides.

Vorstellbar ist auch, dass mehrere Komponenten der Transporteinrichtung mittels Schraubverbindungen miteinander verbunden sind. Hierbei haben sich insbesondere Schraubverbindungen ohne Hinterschnitt bewährt, da bei derartigen Schraubverbindungen die Gefahr einer Verkeimung bzw. Verunreinigung erfahrungsgemäß geringer ist. Auch bei den übrigen Komponenten und Verbindungsteilen, die sich im Reinraum befinden, ist auf möglichst glatte Oberflächen und auf eine geringe Anzahl von scharfen Kanten und Hinterschnitten zu achten, um die Anhaftung von Keimen zu reduzieren und um die Reinigungsmöglichkeit aller Teile, insbesondere der beweglichen Teile zu verbessern.
Die Erfindung betrifft darüber hinaus ein Verfahren zum Betreiben einer Vorrichtung zum Umformen von Vorformlingen zu Kunststoffbehältnissen, wobei die Vorformlinge entlang einer Transportstrecke transportiert werden, wobei die Vorformlinge in einer Heizvorrichtung temperiert und innerhalb von mindestens zwei, auf einem umlaufenden Blasrad angeordneten Blasformen zu Kunststoffbehältnissen expandiert werden und wobei die Vorformlinge und/oder Kunststoffbehältnisse von einer Transporteinrichtung transportiert werden, welche über einen motorischen Antrieb mit einer Antriebswelle angetrieben wird, und auf der die Vorformlinge oder Kunststoffbehältnisse von wenigstens zwei, an einem Trägerelement angeordneten Greif- und/oder Halteelementen gehaltert werden, wobei die Greif- und/oder Halteelemente relativbeweglich zum Trägerelement mit einem Linearlager gelagert sind. Das Linearlager weist dabei zumindest eine Schiene auf, welche von einem Käfig zumindest abschnittsweise umgeben ist. Innerhalb des Käfigs ist eine Vielzahl von Wälzkörpern, insbesondere mehr als 50 Wälzkörper, angeordnet, welche sich auf der Schiene abwälzen.

Während des Umlaufs liegen Bereiche des Käfigs frei und werden von Sterilisations- und/oder Reinigungsmittel gereinigt bzw. sterilisiert. Freiliegen bedeutet insbesondere, dass diese Bereiche nicht von anderen Teilen, insbesondere der Führung, verdeckt werden. Insbesondere kann "freiliegen" auch bedeuten, dass die Bereiche für die Hände eines Bedieners zugänglich sind. Ein freiliegender Bereich ist daher insbesondere sterilisierbar, ohne dass Montagearbeiten an dem Bauteil vorgenommen werden müssen.

Insbesondere wird ein Sterilisationsmodus zeitweise durchgeführt, in welchem Sterilisationsmittel, insbesondere gasförmiges H2O2, in einen Reinraum der Vorrichtung eingebracht wird, in welchem zumindest die Greif- und/oder Halteelementen und das Linearlager der Transporteinrichtung angeordnet sind. Während des Sterilisationsmodus findet insbesondere keine Behälterproduktion statt. Insbesondere wird während des Sterilisationsmodus die Transporteinrichtung zumindest zeitweise kontinuierlich umlaufend betrieben.

Insbesondere wird beim Verfahren zum Transportieren von Kunststoffbehältnissen oder Vorformlingen das Trägerelement rotierend von einer Antriebswelle eines motorischen Antriebs angetrieben und ist zusammen mit den Greif- und/oder Halteelementen vollständig in einem im Wesentlichen geschlossenen Reinraum angeordnet. Weiter können die jeweiligen zu transportierenden Kunststoffbehältnisse oder Vorformlinge während ihres Transportes über die jeweiligen Greif- und/oder Halteelemente des Trägerelementes vollständig in dem im Wesentlichen geschlossenen Reinraum geführt werden.

Vorzugsweise werden die jeweiligen zu transportierenden Kunststoffbehältnisse oder Vorformlinge vor ihrem Transport über das jeweilige Greif- und/oder Halteelement in den Reinraum geführt bzw. treten in den Reinraum ein.

Weiterhin kann es sinnvoll sein, wenn die Kunststoffbehältnisse oder Vorformlinge vor ihrer Führung oder Beförderung in den im Wesentlichen geschlossenen Reinraum sterilisiert werden und nach dem Transport an eine Behandlungsstation und/oder an eine weitere Transporteinrichtung weitergegeben werden. Bevorzugt können die Kunststoffbehältnisse oder Vorformlinge direkt vor, während oder unmittelbar nach der Sterilisation in den Reinraum geführt werden.

Auch kann es sein, dass während des Transportes von Kunststoffbehältnissen oder Vorformlingen ihr relativer Abstand definiert verändert wird. Hierzu kann die Transporteinrichtung bspw. als Teilungsverzugsstern ausgebildet sein.

Um die Sterilität des Reinraum zumindest annähernd gewährleisten zu können, kann in bestimmten Zeitabständen ein Reinigungs- und/oder Sterilisationsprozess des Reinraums und/oder der Transporteinrichtung erfolgen. Während eines solchen Reinigungsprozesses sind bevorzugt keine Kunststoffbehältnisse oder Vorformlinge im Reinraum angeordnet. Jedoch können während des Reinigungsprozesses die Tragscheibe über den motorischen Antrieb und die Greif- und/oder Halteelemente zusammen mit der Tragscheibe bewegt werden, um möglichst alle Teile mit Reinigungs- und/oder Sterilisationsfluid und/oder Reinigungsgas benetzen zu können.

Somit kann beispielhaft nach dem Transportieren von Kunststoffbehältnissen oder Vorformlingen ein Reinigungs- und/oder Sterilisationsprozess der Transporteinrichtung erfolgen, bei dem im Reinraum angeordnete Komponenten der Transporteinrichtung mit Reinigungs- und/oder Sterilisationsfluid und insbesondere mit Sterilisationsgas, beinhaltend Wasserstoffperoxid, beaufschlagt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt einen schematischen Querschnitt durch eine Ausführungsform einer erfindungsgemäßen Transporteinrichtung.
Fig. 2 zeigt eine schematische Perspektivansicht einer Ausführungsform der erfindungsgemäßen Transporteinrichtung, die sich in einem Reinraum befindet.
Fig. 3 zeigt eine weitere schematische Perspektivansicht der Transporteinrichtung gemäß Fig. 2 ohne Reinraum.
Fig. 4 zeigt eine schematische Ansicht von schräg unten auf die in den Figuren 2 und 3 dargestellte Ausführungsform der Transporteinrichtung.
Fig. 5 zeigt einen perspektivischen Teil-Längsschnitt der in den Figuren 2 bis 4 dargestellten Ausführungsform der Transporteinrichtung.
Fig. 6 zeigt eine schematische Draufsicht auf ein Greif- und Halteelement, das Teil der erfindungsgemäßen Transporteinrichtung ist.
Fig. 7 zeigt eine schematische Seitenansicht des in Fig. 6 dargestellten Greif- und Halteelements.
Fig. 8 zeigt eine schematische Seitenansicht auf eine weitere Ausführungsform eines Greif- und Halteelementes, das Teil der Transporteinrichtung sein kann.
Fig. 9 zeigt eine schematische Draufsicht auf das in Fig. 8 dargestellte Greif- und Halteelement.
Fig. 10 zeigt zwei schematische Querschnitte durch die in Figur 8 gezeigte Ausführungsform eines Greif- und Halteelementes entlang der Schnittlinien D und E.
Fig. 11 zeigt eine schematische Darstellung einer möglichen Anordnung der erfindungsgemäßen Transporteinrichtung in einem Produktionsprozess. Zudem verdeutlicht die Fig. 11 eine Ausführungsvariante eines erfindungsgemäßen Verfahrens.
Fig. 12a und 12b zeigen eine Linearführung im Längsschnitt entlang der Linie Z-Z aus Figur 6
Fig. 13 zeigt eine Ausführungsform mit zwei Linearführungen

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

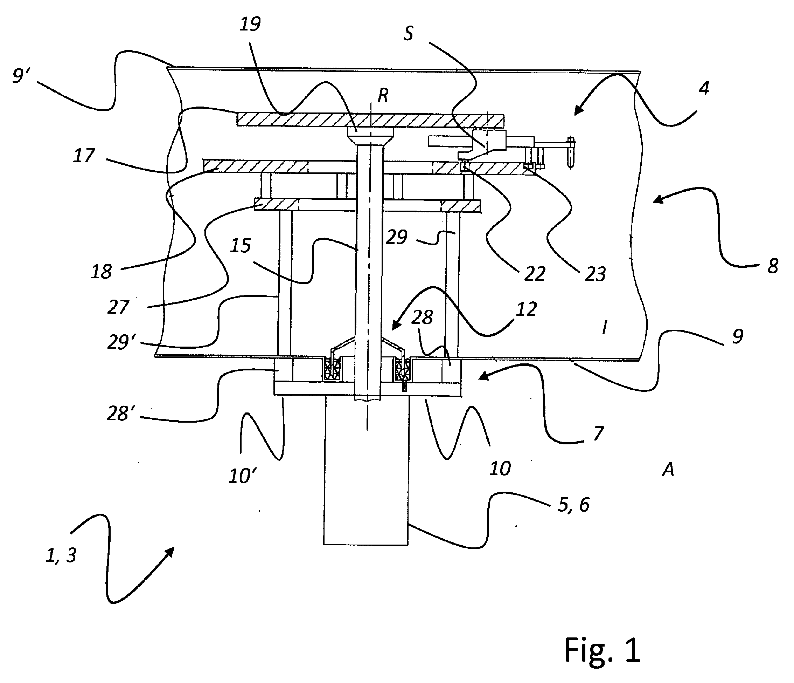

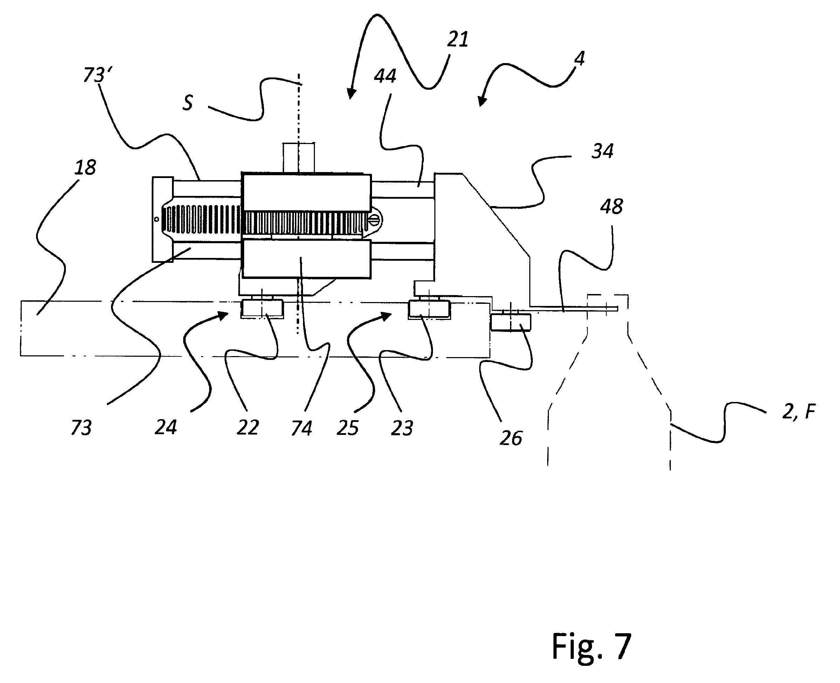

Fig. 1 zeigt einen schematischen Querschnitt durch eine Ausführungsform einer erfindungsgemäßen Transporteinrichtung 1 für Kunststoffbehältnisse 2 (vgl. Fig. 7) oder Vorformlinge. Die Transporteinrichtung 1 ist vorliegend als Teilungsverzugsstern 3 ausgebildet, mittels welchem die Kunststoffbehältnisse 2 oder Vorformlinge während ihres Transportes durch die Transporteinrichtung 1 auf definierte Abstände voneinander gebracht werden können.

Die Transporteinrichtung 1 umfasst einen motorischen Antrieb 5, der zugleich als Standbein 6 für die Transporteinrichtung 1 bzw. für den Teilungsverzugsstern 3 dient. Der motorische Antrieb 5 umfasst eine Antriebswelle 15, die rotationsbeweglich durch den motorischen Antrieb 5 antreibbar ist. Die Bezugsziffer R verweist in Fig. 1 auf die Rotationsachse der Antriebswelle 15. Das dem motorischen Antrieb 5 abgewandte freie Ende der Antriebswelle 15 besitzt einen Flanschabschnitt 19, an dem das Trägerelement 17 befestigt ist. Das Trägerelement 17 wird somit über die Antriebswelle 15 um die Rotationsachse R rotierend angetrieben.

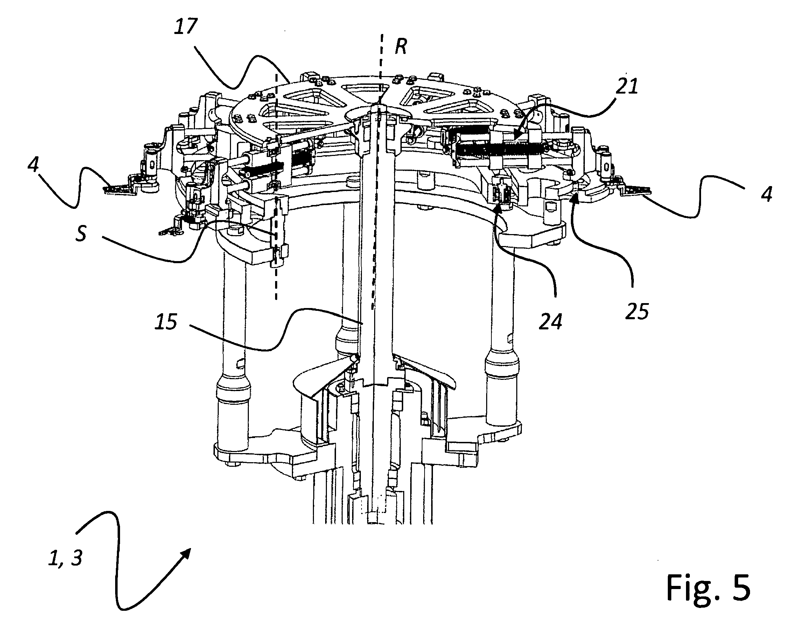

An einer Unterseite des Trägerelementes 17 sind mehrere Greif- und Halteelemente 4 angeordnet, von welchen in Fig. 1 lediglich ein Greif- und Halteelement 4 dargestellt ist. Die Greif- und Halteelemente 4 sind jeweils um eine vertikal orientierte Schwenkachse S schwenkbar an einer dem motorischen Antrieb 5 entgegengewandten Seite des Trägerelementes 17 angeordnet. Weiter sind die Greif- und Halteelemente 4 jeweils über ein oder mehrere erste Führungsrollen 22 in einer ersten Führungsbahn 24 sowie über ein oder mehrere zweite Führungsrollen 23 in einer zweiten Führungsbahn 25 gelagert (vgl. Fig. 5). Die Führungsbahnen 24 und 25 sind Bestandteil einer Führungseinheit 18.

Das Trägerelement 17 ist über die Antriebswelle 15 relativ zur Führungseinheit 18 rotierbar, so dass bei relativer Rotation des Trägerelements 17 zur Führungseinheit 18 die ersten und zweiten Führungsrollen 22 und 23 in ihrer jeweiligen ersten oder zweiten Führungsbahn 24 oder 25 geführt sind. Mittels der relativen Rotationsbewegung des Trägerelements 17 zur Führungseinheit 18 ist eine Schwenk- und Hubbewegung der Greif- und Halteelemente 4 definiert vorgebbar. Vorzugsweise sind die Führungsbahnen 24 und 25 sowie die Führungsrollen 22 und 23 schmiermittelfrei und aus Kunststoff ausgebildet. Eingesetzt werden für die Lagerung der Führungsrollen 22 und 23 insbesondere Keramikkugellager und /oder geeignete Hybridlagern. Hierdurch kann eine Verunreinigung des Reinraums 8, auf welchen nachfolgend weiter Bezug genommen wird, aufgrund von Schmiermitteln ausgeschlossen werden. Weiter können die Führungsrollen 22 und 23 sowie die Führungsbahnen 24 und 25 derart ausgebildet sein, dass ihre Oberfläche während eines Reinigungsvorgangs des Reinraums 8 im Wesentlichen vollständig mit Sterilisationsfluid und/oder Sterilisationsgas und/oder Reinigungsmitteln beaufschlagbar ist.

Zu erkennen ist darüber hinaus eine Halteeinrichtung 27. Die Führungseinheit 18 ist austauschbar an der Halteeinrichtung 27 fixiert. Somit können wahlweise zeitlich nacheinander mehrere unterschiedliche Führungseinheiten 18 an der Halteeinrichtung 27 angebracht werden, wobei in Abhängigkeit der jeweiligen an der Halteeinrichtung 27 fixierten Führungseinheit 18 und dem Verlauf ihrer Führungsbahnen 24 und 25 eine Hub- und Schwenkbewegung der Greif- und Halteelemente 4 bei Rotation des Trägerelementes 17 definiert vorgebbar ist. Das Trägerelement 17, die Führungseinheit 18 sowie die Halteeinrichtung 27 sind vollständig im Reinraum 8 angeordnet. Die Antriebswelle 15 ist abschnittsweise im Reinraum 8 angeordnet, der motorische Antrieb 5 ist außerhalb des Reinraums 8 angeordnet. Vorformlinge oder Kunststoffbehältnisse, welche über die Transporteinrichtung 1 bzw. den Teilungsverzugsstern 3 transportiert werden, sind während dieses Transportes vollständig im Reinraum 8 geführt. Der Reinraum 8 umfasst einen oberen Wandabschnitt 9' sowie einen unteren Wandabschnitt 9, wobei die Antriebswelle 15 durch den unteren Wandabschnitt 9 hindurchtritt. Im Bereich des Durchtritts ist ein Innenbereich I des Reinraums 8 gegenüber einem Außenbereich A mittels einer fluidischen Dichtungseinrichtung 12 abgedichtet. Die fluidische Dichtungseinrichtung 12 ist als sogenanntes Wasserschloss ausgebildet.

Auf der dem Reinraum 8 zugewandten Seite des motorischen Antriebs 5 ist eine Stützkonstruktion 7 angeordnet. Die Stützkonstruktion 7 erstreckt sich vom motorischen Antrieb 5 weg und besitzt hierzu mehrere Auslegerarme, von welchen im Querschnitt der Fig. 1 zwei Auslegerarme 10 und 10' zu erkennen sind. Jeder der Auslegerarme 10 und 10' besitzt eine Stützsäule, die vorliegend jeweils aus einem ersten Stützsäulenabschnitt 28 bzw. 28' und einem zweiten Stützsäulenabschnitt 29 bzw. 29' gebildet ist. Die zweiten Stützsäulenabschnitte 29 und 29' stehen in Verbindung mit der Halteeinrichtung 27. Im Bereich einer Kontaktstelle des jeweils ersten Stützsäulenabschnittes 28 bzw. 28' zum jeweils zweiten Stützsäulenabschnitt 29 und 29' treten die Stützsäulen durch den unteren Wandabschnitt 9 des Reinraums 8 hindurch. Bevorzugt befindet sich im Bereich des Durchtritts eine weitere Dichtungseinrichtung um eine Verunreinigung des Reinraums 8 zu vermeiden

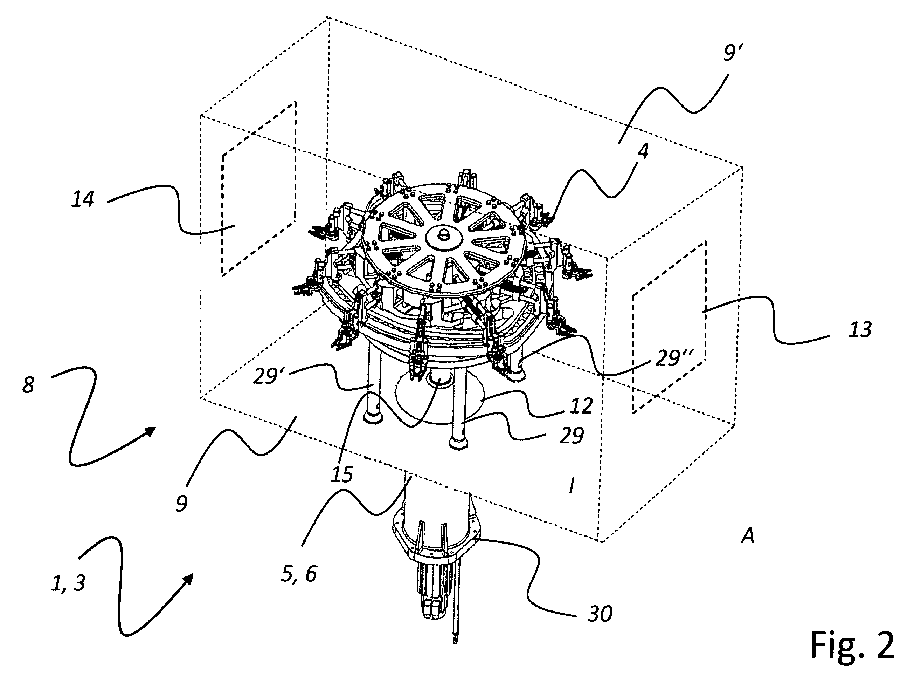

Die schematische Perspektivansicht der Fig. 2 zeigt nochmals die erfindungsgemäße Transporteinrichtung 1 bzw. den Teilungsverzugsstern 3. In der dargestellten Ausführungsform umfasst der als Standbein 6 ausgebildete motorische Antrieb 5 an seiner unteren und dem Reinraum 8 abgewandten Seite einen Flanschabschnitt 30, welcher bspw. zur Befestigung der Transporteinrichtung 1 an einer Trageeinrichtung vorgesehen sein kann. In Fig. 2 ist darüber hinaus gut zu erkennen, dass der als Standbein 6 ausgebildete motorische Antrieb 5 im Bereich eines Schwerpunktes der Transporteinrichtung 1 angeordnet ist. An der unteren und dem motorischen Antrieb 5 zugewandten Seite des Trägerelementes 17 befinden sich weiterhin die Greif- und Halteelemente 4. Die Greif- und Halteelemente 4 sind vollständig im Reinraum 8 angeordnet. Der motorische Antrieb 5 ist hierbei außerhalb des Reinraums 8 angeordnet. Erkennbar ist zudem, dass die bereits in Fig. 1 dargestellten oberen Stützsäulenabschnitte 29, 29' und 29" vollständig im Reinraum 8 angeordnet sind und an ihrem jeweiligen unteren und in Richtung des motorischen Antriebs 5 weisenden Ende eine Dichtungseinrichtung aufweisen. Die untere Gehäusewand 9 des Reinraums 8 ist vorliegend intransparent dargestellt, während die weiteren Gehäusewände des Reinraums 8 transparent dargestellt sind.

Erkennbar ist zudem die fluidische Dichtungseinrichtung 12, welche sich vollständig um die Antriebswelle 15 erstreckt und das Innere /des Reinraums 8 gegenüber dem Außenbereich A abdichtet. Die Bezugsziffer 13 verweist auf einen Zugang der Vorrichtung, durch welchen Kunststoffbehältnisse oder Vorformlinge in den Bereich der Transporteinrichtung eintreten und nach Eintritt durch die Transporteinrichtung 1 bzw. den Teilungsverzugsstern 3 in Richtung des Ausgangs 14 zum Blasrad weitertransportiert werden. Sowohl der Zugang 13 als auch der Ausgang 14 können an weiteren Positionen des Reinraums 8 angeordnet sein. Eine Übergabe der Vorformlinge findet hier innerhalb eines Reinraums 8 statt. Insbesondere werden die Vorformlinge beim Transport durch den Ausgang 14 direkt in einen sterilen Raum bzw. Reinraum 8 eines Blasrades (nicht dargestellt) übergeben. Eine Kontamination der Vorformlinge während der Übergabe kann hierdurch ausgeschlossen werden. Auch kann es sein, dass im Reinraum 8 weitere Einrichtungen, wie bspw. eine Streckblasmaschine und/oder weitere Transporteinrichtung 1 bzw. Teilungsverzugssterne 3 und/oder Sterilisatoren, Füller, Verschließer angeordnet sind. Auch hinsichtlich der Dimensionierung und der Formgebung des Reinraums 8 ist die in Fig. 2 gezeigte Ausführungsform lediglich beispielhaft zu deuten, so dass der angesprochene Fachmann die Dimensionierung und Formgebung des Reinraums 8 in der Praxis je nach Anforderung ausgestalten kann. Im Bereich der Transporteinrichtung 1 und/oder im Bereich eines Blasrades und/oder im Bereich einer Sterilisationseinrichtung, welche der Transporteinrichtung 1 nachgeordnet ist, kann bevorzugt Überdruck herrschen.

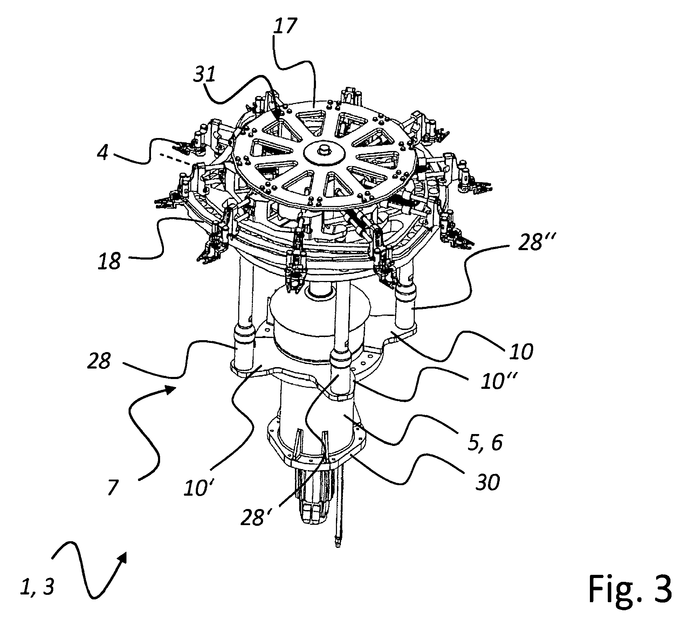

Die weitere perspektivische Ansicht der Fig. 3 zeigt nochmals die Transporteinrichtung 1 aus Fig. 2, jedoch ohne Reinraum 8. Aus Gründen der Übersichtlichkeit wurde bei der in Fig. 3 gezeigten Darstellung auf den Reinraum 8 verzichtet. Erkennbar sind das Trägerelement 17 sowie die Führungseinheit 18. Das Trägerelement 17 besitzt mehrere Aussparungen 17, über welche Reinigungsfluid und/oder Reinigungsgas während eines Reinigungsprozesses der Transporteinrichtung 1 an die zum Trägerelement 17 benachbarte Führungseinheit 18 weitergebbar ist. Dargestellt ist zudem eine Stützkonstruktion 7, welche mehrere vom motorischen Antrieb 5 sich weg erstreckende Auslegerarme besitzt, von denen drei mit Bezugsziffern 10, 10' und 10" zu erkennen sind. Auf jedem der Auslegerarme 10, 10 und 10" ist jeweils ein unterer Stützsäulenabschnitt 28, 28' und 28" angeordnet. Die unteren Stützsäulenabschnitte 28, 28' und 28" sind bei vorherigem in Fig. 2 dargestelltem Ausführungsbeispiel außerhalb des Reinraums 8 angeordnet.

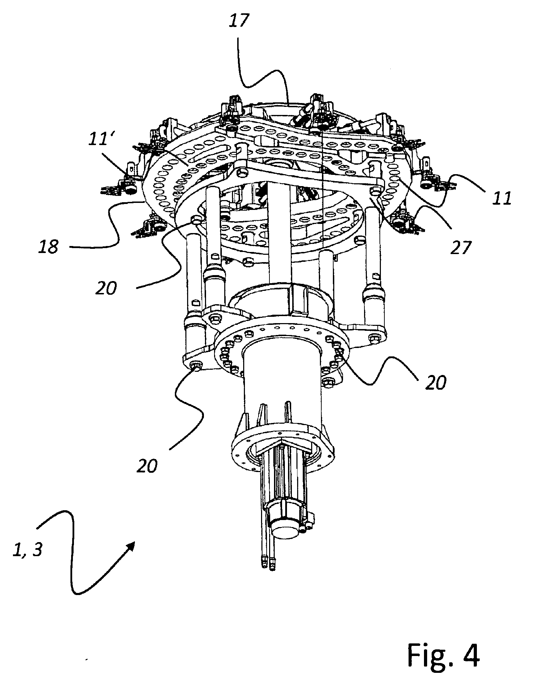

Fig. 4 zeigt eine schematische Ansicht von schräg unten auf die in den Figuren 2 und 3 dargestellte Ausführungsform der Transporteinrichtung 1. Zur Verbindung bzw. Fixierung mehrerer Komponenten der Transporteinrichtung 1 miteinander besitzt die Transporteinrichtung 1 mehrere Schraubverbindungen 20. Sämtliche Schraubverbindungen 10 der Transporteinrichtung 1 sind ohne Hinterschnitte und vorliegend als Außenmehrkantköpfe ausgebildet. Im Rahmen eines Reinigungsvorgangs können keine Restbestände an Reinigungsfluid oder Reinigungsgas in den Schraubverbindungen 20 zurückbleiben. Weiter kann die zugängliche Oberfläche der Schraubverbindungen 20 während eines Reinigungs- und/oder Sterilisationsvorgangs vollständig mit Reinigungs- und/oder Sterilisationsfluid bzw. Reinigungs- und/oder Sterilisationsgas beaufschlagt werden.

Weiter besitzt die Führungseinheit 18 mehrere Aussparungen 11 bzw. 11'. Die ersten Aussparungen 11 sind hierbei im Bereich einer ersten Führungsbahn 24 (vgl. Fig. 5) der Führungseinheit 18 angeordnet, die zweiten Aussparungen 11' im Bereich einer zweiten Führungsbahn 25 (ebenso Fig. 5) der Führungseinheit 18. Über die Aussparungen 11 und 11' kann Reinigungs- und/oder Sterilisationsfluid oder Reinigungs- und/oder Sterilisationsgas während eines Reinigungs- und/oder Sterilisationsvorgangs der Transporteinrichtung 1 an zur Führungseinheit 18 benachbarte Komponenten der Transporteinrichtung 1, bspw. die Halteeinrichtung 27 oder das Trägerelement 17, weitergegeben werden. Weiter dienen die Aussparung 11 und 11' einer Massereduzierung der Führungseinheit 18 und insbesondere einer schnellen Erwärmung der Führungseinheit.

Die Führungseinheit 18 ist insbesondere aus Aluminium gefertigt und stationär bzw. ortsfest angeordnet.

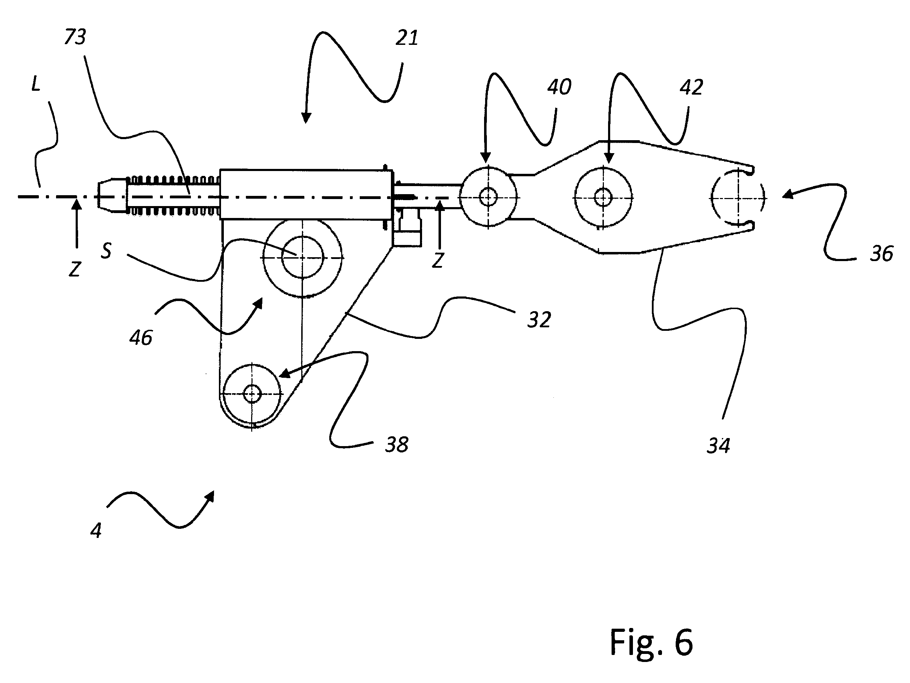

Fig. 5 zeigt eine schematische Schnittansicht der in den Figuren 2 bis 4 dargestellten Ausführungsform der erfindungsgemäßen Transporteinrichtung 1 bzw. eines Teilungsverzugssterns 3. Erkennbar sind hierbei die erste Führungsbahn 24 der Führungseinheit 18 sowie die zweite Führungsbahn 25 der Führungseinheit 18. Jedes der Greif- und Halteelemente 4 besitzt ein oder mehrere erste Führungsrollen 22 sowie ein oder mehrere zweite Führungsrollen 23. Die ersten Führungsrollen 22 sind in der ersten Führungsbahn 24 zwangsgeführt, die zweiten Führungsrollen 23 sind in der zweiten Führungsbahn 25 zwangsgeführt. Sämtliche Greif- und Halteelemente 4 besitzen eine Linearführung 21 (detailliert in Fig. 6), die mit den zweiten Führungsrollen 23 in Verbindung gebracht ist, so dass mittels der Zwangsführung der zweiten Führungsrollen 23 in der zweiten Führungsbahn 25 und bei einer Rotationsbewegung des Trägerelementes 17 um die Achse R eine Hub- und Rückhubbewegung der jeweiligen Greif- und Halteelemente 4 definiert vorgebbar ist. Weiter besitzen die Greif- und Halteelemente 4 jeweils ein Basiselement 32 (vgl. Fig. 6). Das Basiselement 32 ist unmittelbar mit den ersten Führungsrollen 22 verbunden, so dass mittels der Zwangsführung der ersten Führungsrollen 22 in der ersten Führungsbahn 24 und bei einer Rotationsbewegung des Trägerelementes 17 um die Achse R ein Schwenkbewegung der jeweiligen Greif- und Halteelemente 4 um die jeweilige Schwenkachse S definiert vorgebbar ist. Sowohl die Schwenkbewegung der Greif- und Halteelemente 4 als auch die Hub- und Rückhubbewegung der Greif- und Halteelemente 4 ist somit vom Verlauf der Führungsbahnen 24 und 25 abhängig. Bspw. können die Schwenk- und Hubbewegung der Greif- und Halteelemente 4 dergestalt sein, dass das jeweilige zu transportierende Kunststoffbehältnis 2 bzw. der jeweilige zu transportierende Vorformling zumindest abschnittsweise während des Transportes in einer linearen Bewegung geführt wird. Insbesondere wird bei einem als Eingabestern ausgebildeten Teilungsverzugsstern die kombinierte Schwenk- und Linearbewegung dazu genutzt, die Vorformlinge nach der Eingabe in den Bereich der mit dem Blasrad rotierenden Blasform auf ihrem Weg so lang zu begleiten, bis die Blasform geschlossen ist und sie somit die Vorformlinge selbst transportieren kann. Gleiches gilt für die Entnahme des Behälters von einer als Entnahmestern ausgebildeten Transporteinheit 4.

Fig. 6 zeigt eine schematische Draufsicht auf ein Greif- und Halteelement 4, wie es für eine Ausführungsform einer erfindungsgemäßen Transporteinrichtung 1 Verwendung finden kann. Das Greif- und Halteelement 4 umfasst einen Kopf 34 sowie einen Basisabschnitt 32 und eine Linearführung 21. Die Linearführung 21 umfasst eine Schiene 73. Der Kopf 34 besitzt eine Aufnahmeposition 36 für ein Kunststoffbehältnis 2 oder einen Vorformling und ist mit der Schiene 73 verbunden. Parallel zu der Schiene 73 wird eine weitere Schiene 73' der Linearführung 21 geführt (vgl. Fig. 7). Das Greif- und Halteelement 4 ist über das Basiselement 32 schwenkbeweglich mit dem Trägerelement 17 (vgl. vorhergehende Figuren) verbunden. Hierzu kann bspw. ein Bolzen in den Lagerbereich 46 des Basiselementes 32 greifen. Ein nicht näher gezeigtes Schwenklager ist auch hier bevorzugt aus Keramik gefertigt, zumindest die Teile, welche die Laufflächen für die Wälzkörper aufweisen. Die Wälzköprer des Schwenklagers können auch aus Keramik oder Edelstahl gefertigt sein. Die Schwenkachse des Greif- und Halteelementes ist weiterhin mit Bezugsziffer S angedeutet. Ein zweiter Befestigungsbereich 40 ist zur Fixierung der ein oder mehreren zweiten Eingriffsmittel bzw. der wenigstens einen zweiten Führungsrolle 23 (vgl. Fig. 7) vorgesehen. Die zweiten Führungsrollen 23 sind mit der Schiene 73, 73' verbunden, so dass bei Zwangsführung der ein oder mehreren zweiten Eingriffsmittel bzw. der ein oder mehreren zweiten Führungsrollen 23 in der zweiten Führungsbahn 25 eine Relativbewegung der ein oder mehreren zweiten Eingriffsmittel bzw. der ein oder mehreren zweiten Führungsrollen 23 und der Schiene 73, 73' zum Basiselement 32 resultiert.

Ein erster Befestigungsbereich 38 ist zur Fixierung der ein oder mehreren ersten Eingriffsmittel bzw. der wenigstens einen ersten Führungsrolle 22 (vgl. Fig. 7) vorgesehen. Mittels Zwangsführung der ein oder mehreren ersten Eingriffsmittel bzw. der ein oder mehreren ersten Führungsrollen 22 in der ersten Führungsbahn 24 ist somit eine Schwenkbewegung des Basiselementes 32 sowie des gesamten Greif- und Halteelementes 4 um die Schwenkachse S bewirkbar. Die Führungsrolle 22 ist exzentrisch zur Schwenkachse S angebracht.

Angedeutet ist darüber hinaus ein dritter Befestigungsbereich 42. Der dritte Befestigungsbereich ist im Bereich des Kopfes 34 des Greif- und Halteelementes 4 zu finden und zur Fixierung einer oder mehrerer Ansteuerrollen 26 (vgl. Fig. 7) vorgesehen.

Fig. 7 zeigt eine schematische Seitenansicht auf das in Fig. 6 dargestellte Greif- und Halteelement 4. Der Kopf 34 des Greif- und Halteelementes 4 besitzt einen zangenförmigen Abschnitt 48, über welchen das jeweilige zu transportierende Kunststoffbehältnis 2 bzw. der Vorformling aufnehmbar ist. Das Kunststoffbehältnis 2 ist vorliegend als Flasche F ausgebildet. Erkennbar ist die wenigstens eine Ansteuerrolle 26, die bei Bewegung der wenigstens einen ersten Führungsrolle 22 in der ersten Führungsbahn 24 und der wenigstens einen zweiten Führungsrolle 23 in der zweiten Führungsbahn 25 entlang des Außenumfangs der Führungseinheit 18 führbar ist und mit welcher über einen nicht dargestellten Mechanismus die Klammern 48 geöffnet werden.. Der relative Abstand der wenigstens einen Ansteuerrolle 26 und der wenigstens einen zweiten Führungsrolle bleibt bei Bewegung der wenigstens einen zweiten Führungsrolle in der zweiten Führungsbahn im Wesentlichen unverändert, nur zum Öffnen der Klammern 48 bei der Aufnahme (optional auch bei der Abgabe) der Vorformlinge wird die Rolle 26 gegenüber der Rolle 23 geringfügig bewegt (radial von der Achse R aus gesehen nach außen).

Die Linearführung 21 beinhaltet eine erste Schiene 73 sowie eine zweite Schiene 73', welche bei einer Hub- oder Rückhubbewegung des Greif- und Halteelementes 4 gemeinsam und parallel geführt werden. Beide Schienen 73 und 73' sind mit dem Kopf 34 verbunden. Mit dem Zeichen 74 ist eine am Basiselement 32 fest angeordnete Führung 74 für eine Schiene 73 angedeutet. Für die obere Schiene 73' ist ebenso eine Führung 74 vorgesehen.

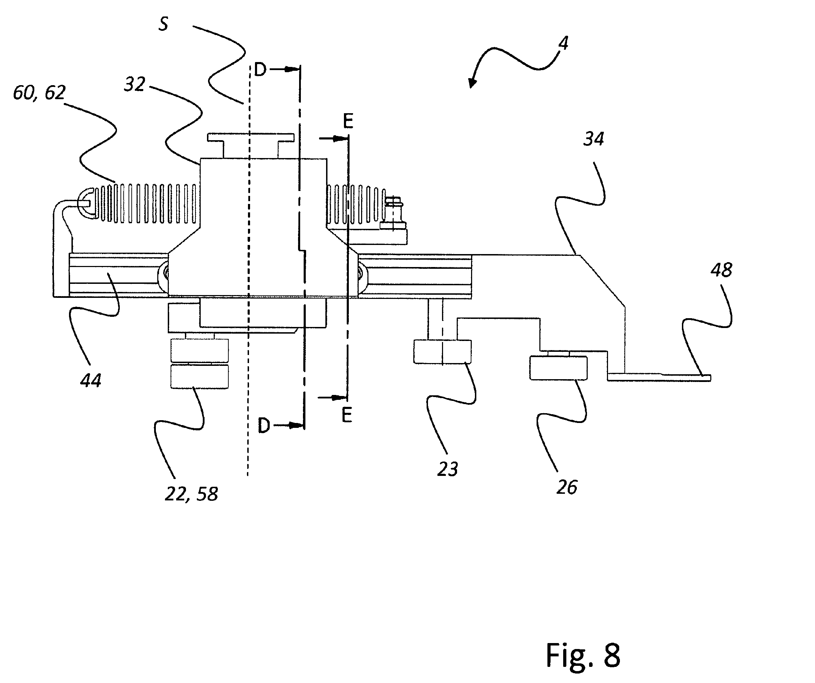

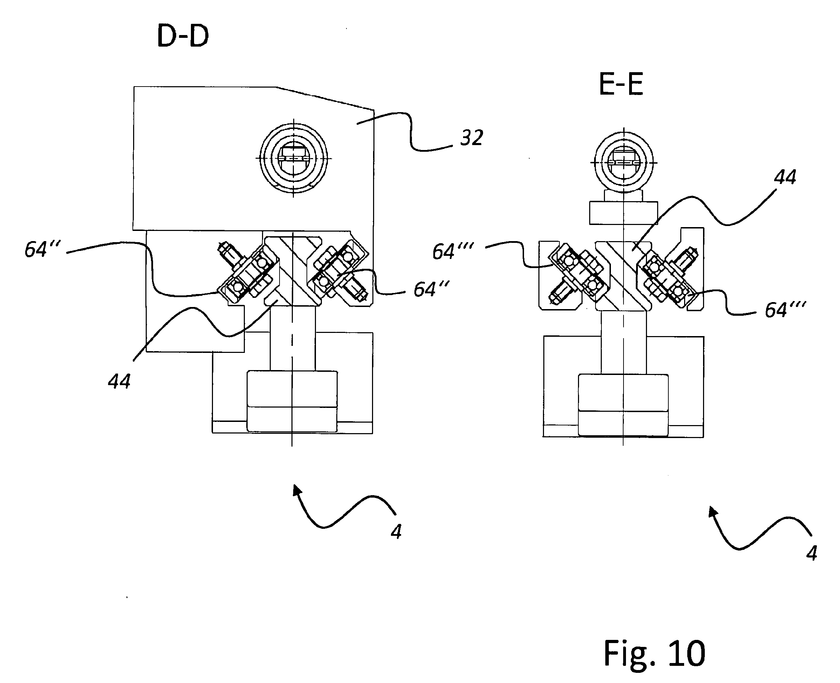

Fig. 8 zeigt eine schematische Seitenansicht auf eine Ausführungsform eines Greif- und Halteelementes 4 gemäß dem Stand der Technik. Das Greif- und Halteelement 4 besitzt, ebenso wie das in Figur 7 gezeigte Ausführungsbeispiel, einen Kopf 34 mit zangenförmigem Abschnitt 48 zur Aufnahme eines Kunststoffbehältnisses 2. Weiter ist eine Stützrolle 26 gezeigt, die entlang des Außenumfangs einer Führungseinheit 18 führbar und zur stabilen Lagerung des Kopfes 34 vorgesehen ist. Die erste Führungsrolle 22, welche in der ersten Führungsbahn 24 bewegbar ist, ist vorliegend als doppelte erste Führungsrolle 58 ausgebildet. Gegensätzlich zum Greif- und Halteelement 4 der Ausführungsform aus Figur 7 besitzt das Greif- und Halteelement 4 des Ausführungsbeispiels der Figur 8 lediglich einen Führungsstab 44, welcher nicht durch einen Käfig gelagert ist sondern auf Gleitrollen 64 (Figur 10). Der Führungsstab 44 ist über ein reversibel elastisch verformbares Element 60, vorliegend eine Feder 62, mit dem Basiselement 32 verbunden. Das reversibel elastisch verformbare Element 60 bzw. die Feder 62 unterstützt eine Rückhubbewegung des Greif- und Halteelementes 4 bei Führung der ersten Führungsrolle 22 und der zweiten Führungsrolle 23 in ihrer jeweiligen Führungsbahn 22 bzw. 23. Mit Bezugsziffer S ist weiterhin die Schwenkachse des Greif-und Halteelementes 4 angedeutet.

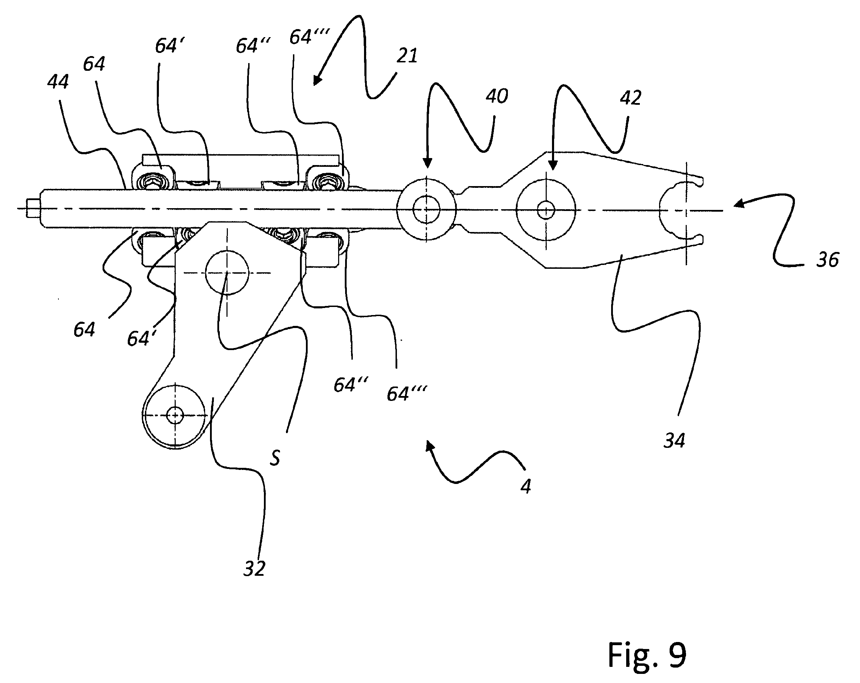

Fig. 9 zeigt eine schematische Draufsicht auf das in Fig. 8 dargestellte Greif- und Halteelement 4. Erkennbar sind weiterhin der Kopf 34 sowie das Basiselement 32. Die Linearführung 21 besteht aus Basiselement 32, Führungsstab 44 sowie vier Paaren von Gleitrollen 64, 64' 64" und 64"'. Jeweils zwei Gleitrollen 64, 64', 64" bzw. 64'" sind auf gegenüberliegenden Seiten mit dem Führungsstab 44 in Kontakt gebracht. Über die Gleitrollen 64, 64', 64" und 64'" wird der Führungsstab 44 gehalten und bei Hub- und Rückhubbewegung des Greif- und Halteelementes 4 relativ zum Basiselement 32 linear geführt.

Gegenüber der in den Figuren 6 und 7 gezeigten Ausführungsform bietet die Ausgestaltung der Linearführung 21 der in den Figuren 8 bis 10 gezeigten Ausführungsform den Nachteil einer nicht so stabilen Führung. Die Gleitrollen 64, 64', 64" und 64"" können bevorzugt mit geeigneten Rillenkugellagern, schmiermittelfrei und einem mit Kunststoff oder aus anderen Materialien aufgebrachten Laufring versehen sein.

Fig. 10 zeigt zwei schematische Querschnitte durch die in Figur 8 gezeigte Ausführungsform eines Greif- und Halteelementes 4 entlang der Schnittlinien D und E. Der Querschnitt durch die Schnittlinie D lässt erkennen, dass die Gleitrollen 64" des Gleitrollenpaares jeweils parallel zueinander verlaufende Kontaktflächen zum Führungsstab 44 aufweisen. Der Querschnitt durch die Schnittlinie E zeigt weiterhin, dass die Gleitrollen 64" des Gleitrollenpaares ebenso jeweils parallel zueinander verlaufende Kontakflächen aufweisen, die im Wesentlichen senkrecht zu den Kontaktflächen der Gleitrollen 64" orientiert sind. Durch die Orientierung der Gleitrollen 64" und 64'" mit ihren Kontaktflächen ist der Führungsstab 44 linear bewegbar über die Gleitrollen 64" und 64"' gehalten.

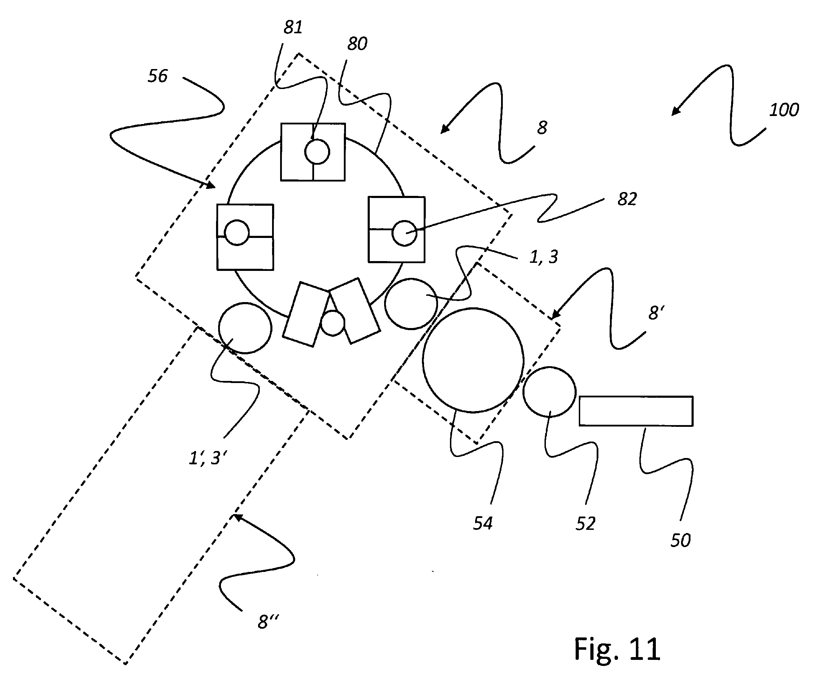

Fig. 11 zeigt eine erfindungsgemäße Vorrichtung zur Umformung von Vorformlingen zu Kunststoffbehältnissen und eine mögliche Anordnung einer erfindungsgemäßen Transporteinrichtung 1 in dieser Vorrichtung. Dargestellt ist ein Ofen 50, über welchen Vorformlinge mit Wärme beaufschlagt werden. Nach Passieren des Ofens 50 werden die mit Wärme beaufschlagten Vorformlinge mittels einer Übergabeeinrichtung 52 an eine Sterilisationsstation 54 weitergeführt.

Erkennbar ist zudem eine erste Transporteinrichtung 1 sowie eine zweite Transporteinrichtung 1', die beide einen gemeinsamen Reinraum 8 umfassen. Sowohl die Transporteinrichtung 1 als auch die Transporteinrichtung 1' besitzen jeweils ein Trägerelement 17 mit wenigstens zwei Greif- und Halteelementen 4. Das Trägerelement 17 der ersten Transporteinrichtung 1 sowie das Trägerelement 17 der zweiten Transporteinrichtung 1 sind vollständig im Reinraum 8 angeordnet. Weiter sind die Greif-und Halteelemente 4 der ersten Transporteinrichtung 1 sowie die Greif- und Halteelemente 4 der zweiten Transporteinrichtung 1' vollständig im Reinraum 8 angeordnet. Der Reinraum 8 kann auch schon bei der Sterilisationsstation, bevorzugt zwischen Sterilisationsstation 54 und Übergabeeinrichtung 52, beginnen. Dies ist mit 8' angedeutet. Die Übergabeeinrichtung 52 kann, obwohl diese in diesem Fall nicht sterilisiert werden muss, ebenso ausgeführt werden wie die Transporteinrichtungen 1, 1'.

Wenn eine Sterilisation im Ofen oder in einem Endbereich des Ofens durchgeführt wird, kann auf die Übergabeeinrichtung 52 und den Sterilisator 54 verzichtet werden. In diesem Fall würden hygienische Bedingungen schon im oder unmittelbar nach dem Ofen herrschen (nicht gezeigt). Unter hygienischen Bedingungen kann beispielsweise ein Beaufschlagen der Preformmündung mit Sterilluft verstanden werden.

Nach Passieren der Sterilisationsstation 54 werden die Vorformlinge von der ersten Transporteinrichtung 1, welche als Teilungsverzugsstern 3 ausgebildet ist, entgegengenommen und an eine nachgeordnete Streckblasmaschine 56 weitergegeben. Auch die auf dem Blasrad 80 angeordneten Blasformen 81 der Streckblasmaschine 56 sind vorliegend im Reinraum 8 angeordnet. Der Reinraum im Bereich des Blasrads ist insbesondere ringförmig ausgeprägt, d.h. dass eine Drehachse des Blasrads außerhalb des Reinraums angeordnet ist (nicht gezeigt).

Mit den Blasformen mitlaufend sind auf dem Blasrad auch Blasdüsen 82 gezeigt, welche den Vorformling gegenüber der Umgebung abdichten und mit welchen sterile Druckluft in den Vorformling eingebracht wird, so dass dieser gegen die Wände der Blasform 81 expandiert wird.

In einem Reinigungsmodus wird gasförmiges H2O2 durch die Luftwege der Blasmaschine (Drehverteiler, Ventilblöcke, Druckminderer (nicht gezeigt)) geleitet und tritt schließlich aus den Blasdüsen 82 in den Reinraum 8 aus. Dort angekommen verteilt sich das Gas im Reinraum und sterilisiert die vorher durch Heißluft aufgeheizten Innenflächen des Reinraums 8. Während dieses Vorgangs werden die Transportsterne 1,1' und das Blasrad 80 kontinuierlich gedreht. Durch das Drehen der Transportsterne 1,1' werden auch die Linearführungen 21 betätigt, was ein Durchströmen und Sterilisieren der Lager mit H2O2 zur Folge hat.

Nach Passieren der Streckblasmaschine 56 werden die nun aus den Vorformlingen streckgeblasenen Behälter 2 von der zweiten Transporteinrichtung 1' entgegengenommen, die ebenso als Teilungsverzugsstern 3' ausgebildet ist.

Ggf. können die streckgeblasenen Behälter 2 von der zweiten Transporteinrichtung 1' an nachfolgende Stationen, wie bspw. eine Füll- und/oder Verschließeinrichtung, weitergeleitet werden. Diese sind in einer Fortsetzung des Reinraums 8" angeordnet. Denkbar ist jedoch auch, dass ein oder mehrere der zweiten Transporteinrichtung 1' bzw. dem Teilungsverzugsstern 3' nachgeordnete Stationen weiterhin im Reinraum 8 angeordnet sind. Die Reinräume 8, 8', 8" können mit unterschiedlichen Drücken beaufschlagt werden, wobei bevorzugt der Druck im Füllbereich 8" am höchsten ist. Hierzu wird Sterilluft in die einzelnen Reinräume 8, 8', 8" mit unterschiedlichen Volumenströmen eingeblasen. Es wäre auch denkbar, in allen Reinräumen 8, 8', 8" einen gleichmäßigen Überdruck herzustellen.

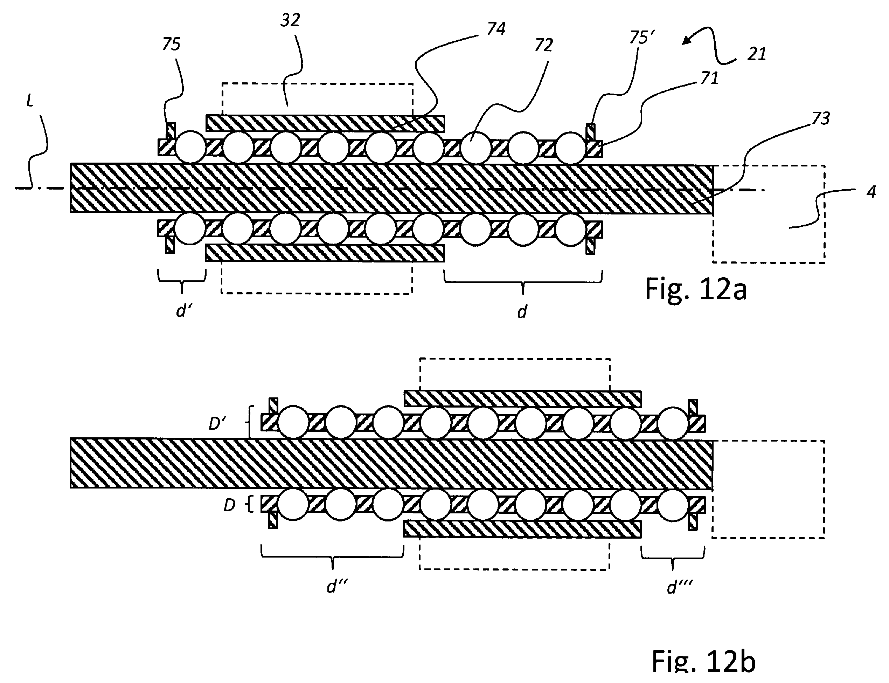

Die Figuren 12a und 12b zeigen zwei Betriebszustände der erfindungsgemäßen Linearführung 21. In Figur 12a ist eine vorgeschobene Position des Linearlagers 21 gezeigt, in der der Abstand zwischen dem nur angedeutetem Greifelement 4 und dem Basiselement 32 relativ groß ist. Das Linearlager 21 weist eine Schiene 73 auf, welche relativbeweglich zum Basiselement 32 ausgestaltet ist. Am Basiselement ist eine Führung 74 angeordnet, welche insbesondere durch eine Presspassung mit dem Basiselement 32 verbunden ist - alternativ kann sie mit einer Spielpassung in das Basiselement 32 eingebracht und über Sicherungsringe relativ zum Basiselement 32 in Längsrichtung L des Lagers 21 gesichert werden. Die Relativbeweglichkeit zwischen Führung 74 bzw. Basiselement 32 und der Schiene 73 gestattet ein Käfig 71, in welchem eine Vielzahl von Wälzkörpern 72 über Bohrungen eingebracht ist, wobei sich die Wälzkörper 72 sowohl auf der Schiene 73 als auch auf der Führung 74 abwälzen. Die Wälzkörper 72 rotieren dabei in den Bohrungen, führen jedoch keine translatorische Relativbewegung zum Käfig 71 aus. Bei den Wälzkörpern 72 handelt es sich in diesem Fall um Edelstahlkugeln 72, es können aber auch tonnen-, nadel oder andersgeformte Wälzkörper zum Einsatz kommen. Die Schiene 73 ist im Wesentlichen zylindrisch ausgeprägt. Die Führung 74 und der Käfig 71 sind koaxial zur Schiene 73 angeordnet und jeweils als Hohlzylinder ausgebildet. Am Käfig 71 ist in Längsrichtung L gesehen an den Enden jeweils ein Anschlag 75, 75' angebracht, welche den Käfig 71 mit einem gewissen Spielraum relativ zur Führung 74 festlegen. Die Länge der Führung 75 in Längsrichtung L kann je nach Ausführungsform in einem Bereich von einem Drittel bis zu zwei Dritteln im Vergleich zum Abstand von den beiden Anschlägen 75, 75' zueinander in Längsrichtung L bzw. der Länge der Schiene 73 liegen. Im vorliegenden Fall beträgt die Länge ungefähr die Hälfte des Abstandes der Anschläge 75, 75' bzw. der Schiene 73.

Dadurch, dass die Führung 74 in Längsrichtung L des Lagers 21 kürzer ist als der Käfig 71 liegen regelmäßig Wälzkörper 72 und Endbereiche des Käfigs 71 frei. Die freiliegenden Bereiche sind auf der dem Greifer 4 abgewandten Bereich mit d' und dem Greifer 4 zugewandten Bereich mit d bezeichnet. Hierdurch können diese Bereiche sehr gut sterilisiert werden.

In der Figur 12b ist eine zurückgezogene Position des Linearlagers aus Figur 12a gezeigt. Die Strecke, die dabei der Greifer 4 relativ zum Basiselement 32 zurückgelegt hat, ist im Wesentlichen doppelt so groß wie die Strecke, die der Käfig relativ zum Basiselement zurückgelegt hat. Durch die Änderung der Position haben sich die freigelegten Bereiche geändert. d' ist nun größer geworden und jetzt so lang wie d". Die Länge des Bereichs d hat sich hat sich auf d'" verkleinert.

Somit liegen im Vergleich zur vorigen Position (Fig. 12a) anderen Bereiche frei.

Wenn sich während der Bewegung in einer Sterilisationsgasatmosphäre nun ständig die Einzelteile 71, 74, 73 des Lagers zueinander verschieben, erreicht man eine sehr gute Zugänglichkeit aller Bereiche. Die Bewegung wird durch das ständige Drehen des Sterns erreicht. Durch die Drehung des Sterns wird auch Sterilisationsgas sowohl zwischen dem Käfig 71 und der Führung 74 als auch zwischen dem Käfig 71 und der Schiene 73 eingebracht. Hierfür ist jeweils ein Abstand zwischen den drei Teilen vorgeshen. Zwischen zwei Wälzkörpern 72 ist in einer Umfangsrichtung des Käfigs 71 gesehen ebenfalls ein Freiraum, durch welchen das Sterilisationsgas strömen kann. Auf diese Weise werden nicht nur der Käfig 71 auf der Innen- und Außenseite sterilisiert, sondern auch die Oberfläche der Schiene 73 und die Innenoberfläche der Führung 74. Mit D ist die Dicke des Käfigs 71 angedeutet. Mit D' ist der Abstand der Innenoberfläche der Führung 74 zur Außenoberfläche der Schiene 73 angedeutet.

Aber nicht nur bei einer Sterilisation sind diese freiliegenden Bereiche d gut zugänglich, sondern beispielsweise auch bei einer manuellen oder automatischen Reinigung. Bei der manuellen Reinigung kann der Bediener den Stern 1,3 im Tippbetrieb verstellen und so abwechselnd die unterschiedlichen Bereiche d des Käfigs 71 nacheinander von Hand reinigen.

Besonders von Vorteil ist es, wenn der Käfig 71 genau oder ein bisschen mehr als doppelt so lang ist wie die Führung 74. Auf diese Weise wird im Laufe des Sterilisierens die komplette Oberfläche des Käfigs 71 freigelegt.

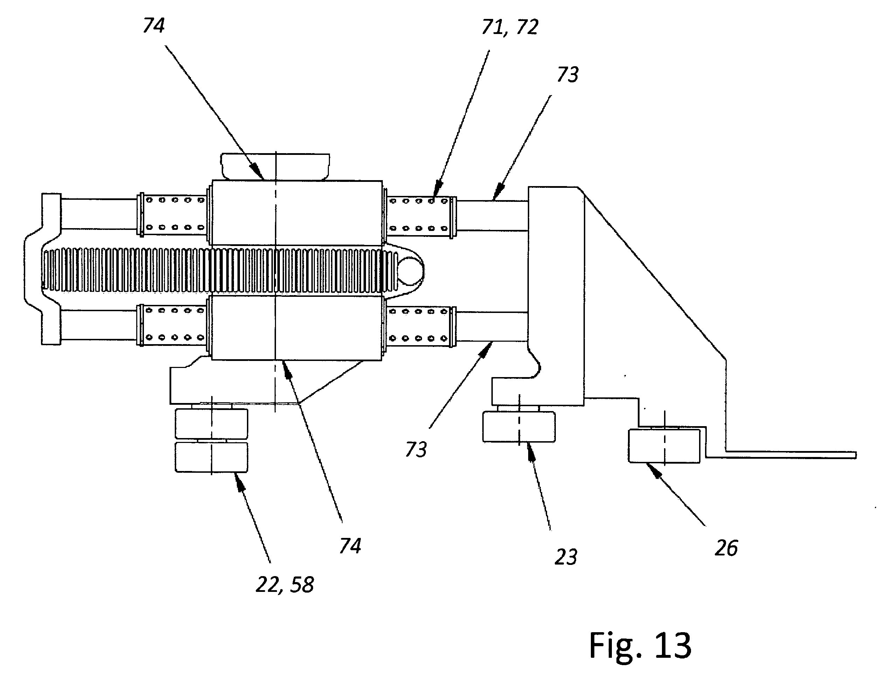

Fig. 13 zeigt eine Ausführungsform mit zwei Linearführungen. Auf diese Weise wird ein noch höheres Maß an Stabilität und Dauerfestigkeit erreicht. Außerdem verhindert die doppelte Lagerung ein Verkippen beim Einsatz runder Linearlager. Aus platztechnischen Gründen sind die zwei Lager übereinander angebracht, so dass neben diesem Übergabearme noch viele weitere Übergabearme auf der Transporteinrichtung in ihrer Umfangsrichtung Platz haben.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Transporteinrichtung
- 2: Kunststoffbehältnis
- 3: Teilungsverzugsstern
- 4: Greif- und Halteelement
- 5: Motorischer Antrieb
- 6: Standbein
- 7: Stützkonstruktion
- 8: Reinraum
- 9: Wandabschnitt
- 10: Auslegerarm
- 12: Fluidische Dichtungseinrichtung
- 13: Zugang
- 14: Ausgang
- 15: Antriebswelle
- 17: Trägerelement
- 18: Führungseinheit
- 19: Flanschabschnitt
- 20: Schraubverbindung
- 21: Linearführung, Linearlager
- 22: erste Führungsrolle
- 23: zweite Führungsrolle
- 24: erste Führungsbahn
- 25: zweite Führungsbahn
- 26: Ansteuerrolle
- 27: Halteeinrichtung
- 28: erster Säulenabschnitt
- 29: zweiter Säulenabschnitt
- 30: Flanschabschnitt
- 32: Basiselement
- 34: Kopf
- 36: Aufnahmeposition
- 38: erster Befestigungsbereich
- 40: zweiter Befestigungsbereich
- 42: dritter Befestigungsbereich
- 44,44': Führungsstab
- 46: Lagerbereich
- 48: Zangenförmiger Abschnitt
- 50: Ofen, Heizvorrichtung, Temperiervorrichtung
- 52: Übergabeeinheit
- 54: Sterilisationsstation
- 56: Streckblasmaschine
- 58: Doppelte erste Führungsrolle
- 60: Reversibel elastisch verformbares Element
- 62: Feder
- 64: Gleitrollen
- 71: Käfig
- 72: Kugel, Wälzkörper
- 73: Schiene
- 74: Führung
- 75: Anschlag
- 80: Blasrad
- 81: Blasform
- 82: Blasdüse
- 100: Vorrichtung zum Umformen von Vorformlingen zu Kunststoffbehältnissen

- A: Außenbereich
- F: Flasche
- I: Innenbereich
- S: Schwenkachse
- d: Freiliegender Abschnitt des Käfigs
- D: Dicke des Kugel
- L: Längsrichtung des Linearlagers

## Patentansprüche

1. Vorrichtung (100) zum Umformen von Vorformlingen zu Kunststoffbehältnissen (2), mit mindestens zwei, auf einem umlaufend angetriebenen Blasrad (80) angeordneten Blasformen (81), innerhalb derer die Vorformlinge zu Kunststoffbehältnissen expandiert werden, mit einer Heizeinrichtung (50) zum Erwärmen der Vorformlinge und mit einer Transporteinrichtung (1) für die Kunststoffbehältnisse (2) oder Vorformlinge, die Transporteinrichtung (1) umfassend einen motorischen Antrieb (5) mit einer Antriebswelle (15), die ein Trägerelement (17) mit wenigstens zwei Greif- und/oder Halteelementen (4) für die jeweiligen zu transportierenden Kunststoffbehältnisse (2) oder Vorformlinge rotierend antreibt, wobei die Greif- und/oder Halteelemente (4) relativbeweglich zum Trägerelement mit einem Linearlager (21) gelagert sind, und wobei das Linearlager zumindest eine Schiene (73) aufweist, **dadurch gekennzeichnet, dass** die Schiene (73) von einem Käfig (71) zumindest abschnittsweise umgeben ist und innerhalb des Käfigs (71) eine Vielzahl von Wälzkörpern (72), insbesondere mehr als 50 Wälzkörper, angeordnet ist, welche sich auf der Schiene (73) abwälzen, wobei die Länge des Käfigs (71) in einer Längsrichtung (L) des Linearlagers (21) länger ist als die Führung (74) und/oder die Schiene (73) und somit Bereiche des Käfigs (d, d', d", d'") zumindest zeitweise freiliegen und diese Bereiche (d, d', d", d'") für eine Sterilisation und/oder eine Reinigung zugänglich sind.

2. Vorrichtung nach Anspruch 1, umfassend zumindest einen im Wesentlichen geschlossenen Reinraum (8), in dem die zumindest zwei Blasformen das Trägerelement (17), das Linearlager (21),und die wenigstens zwei Greif- und/oder Halteelemente (4), und insbesondere die gesamte Transporteinrichtung (1), vollständig aufgenommen sind.

3. Vorrichtung nach Anspruch 1 oder 2, wobei der Käfig zumindest abschnittsweise innerhalb einer Führung (74) angeordnet ist, welche den Käfig (71) zumindest abschnittsweise umgibt und wobei sich die Wälzkörper auf der Führung abwälzen.

4. Vorrichtung nach einem der vorangegangenen Ansprüche, wobei ein Abstand einer Außenseite des Käfigs (71) zur Führung (74) und/oder einer Innenseite des Käfigs (71) zur Schiene (73) größer ist als ein Zwanzigstel, bevorzugt ein Zwölftel, des Abstands (D') von der Innenseite der Führung (74) zur Außenseite der Schiene (73).

5. Vorrichtung nach einem der vorangegangenen Ansprüche, wobei ein Abstand (D) der Außenseite des Käfigs (71) zur Innenseite des Käfigs (71) mindestens ein Zehntel, bevorzugt mindestens ein Fünftel, des Abstands (D') von der Innenseite der Führung (74) zur Außenseite der Schiene (73) beträgt.

6. Vorrichtung nach einem der vorangegangenen Ansprüche, wobei das Linearlager (21) schmiermittelfrei ausgebildet ist und wobei der Käfig (71) insbesondere aus einem gegenüber Sterilisationsmittel, insbesondere H2O2, beständigen Werkstoff, insbesondere Kunststoff, vorzugsweise PEEK gefertigt ist und insbesondere sowohl die Schiene (73) als auch die Führung (74) aus Edelstahloder einem beschichtetem Stahl dessen Oberfläche gegenüber dem Sterilisationsmittel, insbesondere H2O2, beständig ist, gefertigt sind.

7. Vorrichtung nach einem der vorangegangenen Ansprüche, wobei in Längsrichtung (L) des Linearlagers (21) gesehen an mindestens einem Ende, bevorzugt an beiden Enden, des Käfigs (71) ein Anschlag (75, 75') für die Führung (74) angeordnet ist.

8. Vorrichtung nach einem der vorangegangenen Ansprüche, wobei der Käfig (71) als zylindrische Hülse ausgeprägt ist, innerhalb derer sich eine Vielzahl von Bohrungen, deren Längsachsen im Wesentlichen senkrecht zu einer Mittelachse des Linearlagers (21) ausgerichtet sind, sowohl entlang der Längsrichtung (L) als auch entlang der Umfangsrichtung befindet und in den Bohrungen Kugeln als Wälzkörper (72), insbesondere aus Edelstahl oder Keramik, angeordnet sind.

9. Vorrichtung nach einem der vorangegangenen Ansprüche, wobei mindestens zwei, insbesondere mit zylindrischen Schienen (73) versehene, Linearlager (21) pro Greif- und/oder Halteelement (4) zur Lagerung der Greif- und/oder Halteelemente (4) vorgesehen sind.

10. Vorrichtung nach einem der vorangegangenen Ansprüche, wobei ein Ventil vorgesehen ist, welches zwischen einem Reservoir mit Sterilisations- und/oder Reinigungsmedium und dem Reinraum (8) angeordnet ist und welches zum Einlass von dem Sterilisations- und/oder Reinigungsmedium geöffnet werden kann und wobei eine Steuerungsvorrichtung derart ausgelegt ist, zumindest zeitweise gleichzeitig über den Antrieb (5) die Transporteinrichtung (1) drehend anzutreiben und auch das Ventil geöffnet zu halten.

11. Verfahren zum Betreiben einer Vorrichtung (100) zum Umformen von Vorformlingen zu Kunststoffbehältnissen (2), wobei die Vorformlinge entlang einer Transportstrecke transportiert werden, wobei die Vorformlinge in einer Heizvorrichtung (50) temperiert und innerhalb auf einem umlaufenden Blasrad (80) angeordneten Blasformen (81) zu Kunststoffbehältnissen (2) expandiert werden und wobei die Vorformlinge und/oder Kunststoffbehältnisse (2) von einer Transporteinrichtung (1) transportiert werden, welche über einen motorischen Antrieb (5) mit einer Antriebswelle (15) angetrieben wird, und auf der die Vorformlinge oder Kunststoffbehältnisse (2) von wenigstens zwei an einem Trägerelement (17) angeordneten Greif- und/oder Halteelementen (4) gehaltert werden, wobei die Greif- und/oder Halteelemente (4) relativbeweglich zum Trägerelement (17) mit einem Linearlager (21) gelagert sind, und wobei das Linearlager (21) zumindest eine Schiene (73) aufweist, **dadurch gekennzeichnet, dass** die Schiene (73) von einem Käfig (71) zumindest abschnittsweise umgeben ist und innerhalb des Käfigs (71) eine Vielzahl von Wälzkörpern (72), insbesondere mehr als 50 Wälzkörper, angeordnet ist, welche sich auf der Schiene (73) abwälzen, wobei während des Umlaufs Bereiche (d, d', d", d"') des Käfigs (71) freiliegen und von Sterilisations- und/oder Reinigungsmittel gereinigt bzw. sterilisiert werden.

12. Verfahren nach Anspruch 11, wobei ein zeitweise durchführbarer Sterilisationsmodus vorgesehen ist, in welchem Sterilisationsgas, insbesondere gasförmiges H2O2, in einen Reinraum (8) der Vorrichtung (100) über mindestens ein geöffnetes Ventil eingebracht wird, in welchem zumindest die Greif- und/oder Halteelementen (4) und das Linearlager (21) der Transporteinrichtung (1,3) angeordnet sind, und insbesondere während des Sterilisationsmodus keine Behälterproduktion stattfindet und während des Sterilisationsmodus die Transporteinrichtung (1,3) umlaufend betrieben wird.

## Claims

1. An apparatus (100) for forming preforms into plastic containers (2), with at least two blow moulds (81) arranged on a circumferentially driven blowing wheel (80), in which blow moulds the preforms are expanded to plastic containers, with a heating device (50) for warming the preforms, and with a transport device (1) for the plastic containers (2) or the preforms, the transport device (1) comprising a motor drive (5) with a drive shaft (15), which rotatingly drives a carrier element (17) with at least two gripping elements and/or holding elements (4) for the respective plastic containers (2) or preforms to be transported, wherein the gripping elements and/or holding elements (4) are mounted with a linear bearing (21) so as to be movable in relation to the carrier element, and wherein the linear bearing has at least one rail (73), **characterised in that** the rail (73) is surrounded at least in sections by a cage (71) and **in that** a plurality of rolling elements (72), in particular more than 50 rolling elements, which roll on the rail (73), is arranged in the cage (71), wherein the length of the cage (71) in a longitudinal direction (L) of the linear bearing (21) is longer than the guide (74) and/or than the rail (73), and thus areas of the cage (d, d', d", d'") are at least temporarily exposed, and these areas (d, d', d", d'") are accessible for sterilisation and/or cleaning.

2. The apparatus as recited in claim 1, comprising at least one substantially closed clean room (8), in which the at least two blow moulds, the carrier element (17), the linear bearing (21), and the at least two gripping elements and/or holding elements (4), and, in particular the entire transport device (1), are completely accommodated.

3. The apparatus as recited in claim 1 or 2 wherein the cage is arranged at least in sections within a guide (74), which surrounds the cage (71) at least in sections, and wherein the rolling elements roll on the guide.

4. The apparatus as recited in one of the previous claims wherein a distance of an outer side of the cage (71) to the guide (74) and/or of an inner side of the cage (71) to the rail (73) is greater than one twentieth, preferentially one twelfth, of the distance (D') from the inner side of the guide (74) to the outer side of the rail (73).

5. The apparatus as recited in one of the previous claims wherein a distance (D) of the outer side of the cage (71) to the inner side of the cage (71) is at least one tenth, preferentially at least one fifth, of the distance (D') from the inner side of the guide (74) to the outer side of the rail (73).

6. The apparatus as recited in one of the previous claims wherein the linear bearing (21) is formed to be lubricant-free, and wherein the cage (71) is, in particular, made of a material, in particular plastic, preferably PEEK, which is resistant to sterilising agent, in particular to H2O2, and, in particular, both the rail (73) and the guide (74) are made of stainless steel or of a coated steel, the surface of which is resistant to the sterilising agent, in particular to H2O2.

7. The apparatus as recited in one of the previous claims wherein an end stop (75, 75') for the guide (74) is arranged on at least one end, preferentially on both ends of the cage (71), as seen in longitudinal direction (L) of the linear bearing (21).

8. The apparatus as recited in one of the previous claims wherein the cage (71) is formed as a cylindrical sleeve, in which a multitude of holes, the longitudinal axes of which are aligned substantially perpendicular to a central axis of the linear bearing (21), is located both along the longitudinal direction (L) and along the circumferential direction, and wherein spheres, in particular of stainless steel or ceramic, are arranged as rolling elements (72) in the holes.

9. The apparatus as recited in one of the previous claims wherein at least two linear bearings (21), in particular supplied with cylindrical rails (73), are provided for each gripping element and/or holding element (4) for the purpose of bearing the gripping elements and/or holding elements (4).

10. The apparatus as recited in one of the previous claims wherein a valve is provided, which is arranged between a reservoir with sterilising agent and/or cleaning agent and the clean room (8), and which can be opened for letting in the sterilising agent and/or cleaning agent, and wherein a control apparatus is designed such as to rotatingly drive the transport device (1) and to keep the valve open at least temporarily simultaneously via the drive (5).

11. A method for operating an apparatus (100) for forming preforms into plastic containers (2) wherein the preforms are transported along a transport path, wherein the preforms are tempered in a heating device (50) and expanded to plastic containers (2) in blow moulds (81) arranged on a circulating blowing wheel (80), and wherein the preforms and/or plastic containers (2) are transported by a transport device (1) that is driven via a motor drive (5) with a drive shaft (15), and on which transport device (1) the preforms or plastic containers (2) are held by at least two gripping elements and/or holding elements (4) arranged on a carrier element (17), wherein the gripping elements and/or holding elements (4) are mounted with a linear bearing (21) so as to be movable in relation to the carrier element (17), and wherein the linear bearing (21) has at least one rail (73), **characterised in that** the rail (73) is surrounded at least in sections by a cage (71) and **in that** a plurality of rolling elements (72), in particular more than 50 rolling elements, which roll on the rail (73), is arranged in the cage (71), wherein areas (d, d', d", d'") of the cage (71) are exposed and are cleaned or sterilised, respectively, by sterilising agents and/or cleaning agents during circulation.

12. The method as recited in claim 11 wherein a sterilisation mode is provided that can be carried out temporarily, in which sterilising gas, in particular gaseous H2O2, is introduced into a clean room (8) of the apparatus (100) via at least one open valve, in which clean room (8) at least the gripping elements and/or holding elements (4) and the linear bearing (21) of the transport device (1, 3) are arranged and, in particular, no container production is carried out during the sterilisation mode and the transport device (1, 3) is operated to circulate during the sterilisation mode.

## Revendications

1. Dispositif (100) destiné à transformer des préformes en récipients en matière plastique (2), comprenant au moins deux moules de soufflage (81) qui sont disposés sur une roue de soufflage (80) entraînée en rotation et à l'intérieur desquels les préformes sont soumises à une expansion pour obtenir des récipients en matière plastique, un dispositif de chauffage (50) pour chauffer les préformes ainsi qu'un dispositif de transport (1) pour les récipients en matière plastique (2) ou préformes, ledit dispositif de transport (1) comprenant un mécanisme d'entraînement par moteur (5) ayant un arbre moteur (15) qui entraîne en rotation un élément de support (17) ayant au moins deux éléments de préhension et/ou de maintien (4) pour les récipients en matière plastique (2) ou préformes respectifs à transporter, lesdits éléments de préhension et/ou de maintien (4) étant supportés par un palier linéaire (21) de manière à être déplaçables par rapport à l'élément de support, et ledit palier linéaire présentant au moins un rail (73), **caractérisé par le fait que** ledit rail (73) est entouré d'une cage (71) au moins par sections et qu'une pluralité de corps de roulement (72), en particulier plus de 50 corps de roulement, est disposée à l'intérieur de la cage (71), qui roulent sur le rail (73), dans lequel la longueur de la cage (71) est plus longue, dans une direction longitudinale (L) du palier linéaire (21), que le guide (74) et/ou le rail (73) et, ainsi, des zones de la cage (d, d', d", d"') sont dégagées au moins temporairement et ces zones (d, d', d", d"') sont accessibles pour une stérilisation et/ou un nettoyage.

2. Dispositif selon la revendication 1, comprenant au moins une salle propre (8) pour l'essentiel fermée à l'intérieur de laquelle sont logés complètement lesdits au moins deux moules de soufflage, ledit élément de support (17), ledit palier linéaire (21) et lesdits au moins deux éléments de préhension et/ou de maintien (4) et en particulier l'ensemble du dispositif de transport (1).

3. Dispositif selon la revendication 1 ou 2, dans lequel la cage est disposée au moins par sections à l'intérieur d'un guide (74) qui entoure au moins par sections ladite cage (71), et dans lequel les corps de roulement roulent sur ledit guide.

4. Dispositif selon l'une quelconque des revendications précédentes, dans lequel une distance séparant une face extérieure de la cage (71) et ledit guide (74) et/ou une face intérieure de la cage (71) et ledit rail (73) est supérieure à un vingtième, de préférence un douzième, de la distance (D') séparant la face intérieure du guide (74) et la face extérieure du rail (73).

5. Dispositif selon l'une quelconque des revendications précédentes, dans lequel une distance (D) séparant la face extérieure de la cage (71) et la face intérieure de la cage (71) fait au moins un dixième, de préférence au moins un cinquième, de la distance (D') séparant la face intérieure du guide (74) et la face extérieure du rail (73).

6. Dispositif selon l'une quelconque des revendications précédentes, dans lequel le palier linéaire (21) est réalisé à sec et dans lequel la cage (71) est fabriquée en particulier à partir d'un matériau qui est résistant à l'agent stérilisateur, en particulier à l'H₂O₂, en particulier en matière plastique, de préférence en PEEK, et, en particulier, aussi bien le rail (73) que le guide (74) sont fabriqués à partir d'acier inoxydable ou d'un acier revêtu dont la surface est résistante à l'agent stérilisateur, en particulier à l'H₂O₂.

7. Dispositif selon l'une quelconque des revendications précédentes, dans lequel, vu dans la direction longitudinale (L) du palier linéaire (21), une butée (75, 75') pour le guide (74) est disposée à au moins une extrémité, de préférence aux deux extrémités, de la cage (71).

8. Dispositif selon l'une quelconque des revendications précédentes, dans lequel la cage (71) est configurée comme douille cylindrique à l'intérieur de laquelle une pluralité de perçages dont les axes longitudinaux sont orientés pour l'essentiel perpendiculairement à un axe médian du palier linéaire (21) se trouve aussi bien le long de la direction longitudinale (L) que le long de la direction circonférentielle, et des billes en tant que corps de roulement (72), en particulier en acier inoxydable ou en céramique, sont disposées dans lesdits perçages.

9. Dispositif selon l'une quelconque des revendications précédentes, dans lequel au moins deux paliers linéaires (21), en particulier pourvus de rails (73) cylindriques, par élément de préhension et/ou de maintien (4) sont prévus pour supporter les éléments de préhension et/ou de maintien (4).

10. Dispositif selon l'une quelconque des revendications précédentes, dans lequel une vanne est prévue qui est disposée entre un réservoir contenant du milieu de stérilisation et/ou de nettoyage et ladite salle propre (8) et qui peut être ouverte pour faire entrer le milieu de stérilisation et/ou de nettoyage, et dans lequel un dispositif de commande est adapté pour, au moins temporairement en même temps, faire entraîner en rotation le dispositif de transport (1) par ledit mécanisme d'entraînement (5) et, aussi, pour maintenir ouverte ladite vanne.

11. Procédé pour faire fonctionner un dispositif (100) destiné à transformer des préformes en récipients en matière plastique (2), dans lequel les préformes sont transportées suivant un trajet de transport, dans lequel les préformes sont tempérées dans un dispositif de chauffage (50) et sont soumises à une expansion à l'intérieur de moules de soufflage (81) disposés sur une roue de soufflage (80) rotative, pour obtenir des récipients en matière plastique (2), et dans lequel les préformes et/ou récipients en matière plastique (2) sont transportés par un dispositif de transport (1) qui est entraîné par un mécanisme d'entraînement par moteur (5) ayant un arbre moteur (15), et sur lequel les préformes ou récipients en matière plastique (2) sont maintenus par moins deux éléments de préhension et/ou de maintien (4) disposés sur un élément de support (17), lesdits éléments de préhension et/ou de maintien (4) étant supportés par un palier linéaire (21) de manière à être déplaçables par rapport à l'élément de support (17), et ledit palier linéaire (21) présentant au moins un rail (73), **caractérisé par le fait que** ledit rail (73) est entouré d'une cage (71) au moins par sections et qu'une pluralité de corps de roulement (72), en particulier plus de 50 corps de roulement, est disposée à l'intérieur de la cage (71), qui roulent sur le rail (73), dans lequel, lors de la rotation, des zones (d, d', d", d"') de la cage (71) sont dégagées et sont nettoyées ou bien stérilisées par un agent stérilisateur et/ou de nettoyage.

12. Procédé selon la revendication 11, dans lequel un mode de stérilisation réalisable temporairement est prévu dans lequel du gaz de stérilisation, en particulier de l'H₂O₂ gazeux, est introduit via au moins une vanne ouverte dans une salle propre (8) du dispositif (100) où sont disposés au moins les éléments de préhension et/ou de maintien (4) et le palier linéaire (21) du dispositif de transport (1, 3), et dans lequel, en particulier durant le mode de stérilisation, aucune production de récipients n'a lieu, et, pendant le mode de stérilisation, on fait fonctionner en rotation le dispositif de transport (1, 3).
